(19) Europäisches Patentamt / European Patent Office / Office européen des brevets

(11) **EP 2 180 358 B1**

(12) **EUROPÄISCHE PATENTSCHRIFT**

(45) Veröffentlichungstag und Bekanntmachung des Hinweises auf die Patenterteilung:
**23.07.2014  Patentblatt 2014/30**

(51) Int Cl.:
*G02B 5/18* (2006.01)    *G03H 1/30* (2006.01)

(21) Anmeldenummer: **10000197.3**

(22) Anmeldetag: **13.10.2004**

(54) **Optisch variable Beugungsstruktur und Verfahren zu ihrer Herstellung**

Optically variable diffraction structure and method for production thereof

Structure de diffraction optiquement variable et procédé destiné à sa fabrication

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.10.2003  DE 10348623**

(43) Veröffentlichungstag der Anmeldung:
**28.04.2010  Patentblatt 2010/17**

(62) Dokumentnummer(n) der früheren Anmeldung(en) nach Art. 76 EPÜ:
**04790365.3 / 1 676 156**

(73) Patentinhaber: **Giesecke & Devrient GmbH**
**81677 München (DE)**

(72) Erfinder:
- **Kaule, Wittich**
  **82275 Emmering (DE)**
- **Rauscher, Wolfgang**
  **81677 München (DE)**
- **Stenzel, Gerhard**
  **80686 München (DE)**

(74) Vertreter: **Zeuner Summerer Stütz**
**Nußbaumstrasse 8**
**80336 München (DE)**

(56) Entgegenhaltungen:
**EP-A- 0 604 943      EP-A- 1 096 341**
**WO-A-97/16772      WO-A1-00/73991**
**WO-A1-02/02351      DE-A1- 10 100 836**
**US-A- 5 483 363      US-A- 5 825 547**
**US-A- 5 969 863      US-B1- 6 369 919**
**US-B1- 6 392 768**

- **PAWL STEPIEN ET AL.: "Computer generated optically variable devices containing hidden information" SPIE, Bd. 2659, März 1966 (1966-03), Seiten 218-222, XP002326113**
- **WAYNE R.TOMPKIN ET AL: "machine-Verifiable diffractive Features for Document Security" SPIE, Bd. 3314, April 1998 (1998-04), Seiten 203-213, XP002326114**

**Beschreibung**

Die Erfindung betrifft eine optisch variable Beugungsstruktur, die eine offene und eine versteckte Bildinformation enthält, die jeweils im Wesentlichen über die Gesamtfläche der Struktur verteilt sind. Die Erfindung betrifft auch ein Sicherheitselement, ein Sicherheitspapier und einen Datenträger mit einer solchen Beugungsstruktur sowie Verfahren zu ihrer Herstellung.

Es ist bekannt, Hologramme, holographische Gitterbilder und andere hologrammähnliche Beugungsstrukturen zur Echtheitsabsicherung von Kreditkarten, Wertdokumenten, Produktverpackungen und dergleichen zu verwenden. Um das Hologramm oder die hologrammähnliche Struktur ihrerseits gegen Fälschung zu sichern und die Sicherheit der Datenträger insgesamt weiter zu erhöhen, kann zusätzlich eine versteckte Bildinformation in das Hologramm eingebracht werden. Dabei wird innerhalb des primären, ohne weiteres sichtbaren Hologramms ein weiteres Bild untergebracht, das nicht ohne besondere Maßnahmen erkennbar ist. Derartige versteckte Bildinformationen werden auch als "Hidden Image" bezeichnet.

Während man den Bildinhalt des primären Hologramms mit bloßem Auge erkennt, wird zum Sichtbarmachen des Hidden Image üblicherweise ein Laser, etwa ein handelsüblicher Laserpointer, und ein Auffangschirm benötigt. Zum Auslesen der versteckten Information beleuchtet man eine Stelle im primären Hologramm, an der das Hidden Image versteckt ist, mit dem Laser und fängt die Bildinformation des Hidden Image auf dem Schirm auf. Um die versteckte Information leichter auffinden zu können, wird dasselbe Hidden Image oft an mehreren Orten im primären Hologramm untergebracht.

Eine übliche Methode zur Erzeugung eines Hidden Image besteht darin, dieses als dreidimensionales Hologramm so aufzunehmen, dass die Bildinformation des Hidden Image nur mit kohärentem Laserlicht, jedoch nicht bei Beleuchtung mit üblichen inkohärenten Lichtquellen, wie etwa der ambienten Raumbeleuchtung, zu erkennen ist. Unter normaler Beleuchtung wirkt das Hidden Image dann wie eine graue, weißliche oder pastellfarbene Fläche. Beispielsweise beschreibt die Druckschrift DE 42 37 415 A1 ein Verfahren zum Identifizieren eines legitimen Produkts, bei dem ein holographisches Bild eine normalerweise unsichtbare Bildinformation enthält, die mit einem Lesegerät aus Laser und Bildschirm sichtbar gemacht werden kann.

Eine weitere Methode zur Erzeugung von Hidden Images wird in der Druckschrift DE 101 00 836 A1 beschrieben. Der Hidden Image-Bereich besteht dort aus Unterbereichen, die jeweils ein optisches Gitter bestimmter Gitterkonstante und Winkelorientierung enthalten und bei Laserbeleuchtung einen Bildpunkt des versteckten Informationsmusters rekonstruieren. Um die Fälschungssicherheit zu erhöhen, werden die Unterbereiche so angeordnet, dass sie nicht der Form des Informationsmusters entsprechen. Beleuchtet man alle Unterbereiche gleichzeitig mit einem Laserpointer, so kann man das gesamte Hidden Image auf dem Schirm auffangen. Die Unterbereiche werden dabei im Dot-Matrix-Verfahren, wie in der EP 0 467 601 B1 beschrieben, oder im Holomax-Verfahren, das beispielsweise in der WO 97/16772 beschrieben ist, mit den erforderlichen optischen Gittern belegt.

Weitere bekannte Methoden der Erstellung von Hidden Images bedienen sich der Elektronenstrahl-Lithographie. Hierbei wird von dem Hidden Image Motiv zunächst mittels Computer die Fouriertransformierte berechnet. Diese besteht aus einem verschlungenen Linienmuster in mikroskopischen Dimensionen, welches mit Elektronenstrahl-Lithographie einer strahlungsempfindlichen Schicht eingeschrieben wird. Bei Beleuchtung mit einem Laser kann man das zugrunde liegende Hidden Image-Motiv auf einem Schirm sichtbar machen.

Die mit den herkömmlichen Verfahren als echte Hologramme, als Dot-Matrix, als Holomax oder als computererzeugte Fouriertransformierte erstellten Hidden Images weisen nicht die bestmögliche Helligkeit auf. Diese ist jedoch von größter Bedeutung, da ein Hidden Image von sich aus schwer zu erkennen ist und/ oder nur einen kleinen Flächenanteil der Beugungsstruktur einnehmen soll. Hinzu kommt, dass die Helligkeit des zur Sichtbarmachung des Hidden Image erforderlichen Laserlichts zur Vermeidung von Augenschäden, die entstehen können, wenn Laserlicht bei der Prüfung des Hidden Image versehentlich in das Auge trifft, auch über die gesetzlich festgelegte Leistung des Lasers eingeschränkt ist. Auch durch die Anbringung des Hidden Image auf einem rauen Substrat, wie Papier, werden die Helligkeit, der Kontrast und die Bildschärfe des Hidden Image-Motivs auf dem Auffangschirm gravierend vermindert.

Darüber hinaus werden Hidden Images in der Regel durch Ausprobieren und die Verwendung von Erfahrungswerten für die konkret gewünschte Kombination aus Informationsmuster und Geometrie des Auffangschirms konstruiert. Die Ergebnisse sind daher nicht optimal und nur schwer auf geänderte Gestaltungen übertragbar.

Davon ausgehend liegt der Erfindung die Aufgabe zugrunde, eine optisch variable Beugungsstruktur der eingangs genannten Art mit helleren Hidden Images sowie ein Verfahren zur Erzeugung solcher Beugungsstrukturen bereitzustellen. Das Verfahren soll auch eine einfache Berechnung der Gitterdaten des Hidden Image für beliebige Informationsmuster und beliebige Schirmgeometrien ermöglichen.

Diese Aufgabe wird durch die optisch variable Beugungsstruktur mit den Merkmalen der unabhängigen Ansprüche gelöst. Ein Sicherheitselement, ein Sicherheitspapier und ein Datenträger mit solchen Beugungsstrukturen sowie Verfahren zur Herstellung der Beugungsstrukturen sind in nebengeordneten Ansprüchen angegeben. Weiterbildungen der Erfindung sind Gegenstand der Unteransprüche.

Die Erfindung ermöglicht die einfache Erzeugung optisch variabler Beugungsstrukturen, die eine offene und versteckte Bildinformationen enthalten. Der Begriff "offene Bildinformation" bezeichnet dabei jede Art von Bildinformation, die für einen Betrachter ohne besondere Hilfsmittel erkennbar ist. Insbesondere bezieht sich der Begriff auf unter ambienten Beleuchtungsbedingungen sichtbare Hologramme oder hologrammähnliche Beugungsstrukturen, aber auch auf informationshaltige Druckbilder oder Aussparungen in opaken oder transparenten Schichten. Weitere Möglichkeiten der Gestaltung offener Bildinformation sind weiter unten genauer beschrieben.

Die Bildelemente bzw. die Gitterstrukturelemente, die die offene bzw. die versteckte Information erzeugen, können dabei auf verschiedene Weise miteinander kombiniert sein, um beispielsweise das Vorhandensein der versteckten Bildinformation zu tarnen. Die erfindungsgemäßen Beugungsstrukturen erlauben es, außerordentlich leuchtkräftige Hidden-Images in eine offene Bildinformation, wie etwa ein primäres Hologramm, zu integrieren. Nachfolgend wird der Bereich der die versteckte Bildinformation erzeugenden Gitterstrukturelemente auch oft als Hidden-Image-Bereich bezeichnet.

In einem ersten Aspekt der Erfindung weist eine gattungsgemäße Beugungsstruktur erste Bildelemente, insbesondere erste Gitterstrukturelemente, auf, die die offene Bildinformation darstellen und zweite Gitterstrukturelemente, die die versteckte Bildinformation erzeugen. Die zweiten Gitterstrukturelemente sind dabei in nebengeordneten Flächenbereichen der ersten Bildelemente angeordnet, welche für die Darstellung der offenen Bildinformation von untergeordneter Bedeutung sind.

Insbesondere ist dabei die offene Bildinformation unter ambienten Beleuchtungsbedingungen der Beugungsstruktur sichtbar, während die versteckte Bildinformation unter ambienten Beleuchtungsbedingungen nicht erkennbar ist und nur bei gerichteter, im Wesentlichen einfarbiger Beleuchtung der Beugungsstruktur mit einem Schirm auffangbar ist. In bevorzugten Ausgestaltungen sind die ersten Bildelemente durch Gitterstrukturelemente gebildet, die unter ambienten Beleuchtungsbedingungen die offene Bildinformation erzeugen.

Vorzugsweise ist die versteckte Bildinformation aus einer Mehrzahl einzelner Bildpunkte zusammengesetzt. Die zweiten Gitterstrukturelemente sind dabei zweckmäßig jeweils einem dieser Bildpunkte zugeordnet und enthalten ein Gittermuster mit einer solchen Gitterkonstante und Winkelorientierung, dass gerichtete, im Wesentlichen einfarbige Beleuchtung in eine für den zugeordneten Bildpunkt charakteristische Richtung gebeugt wird.

In einer vorteilhaften Ausgestaltung der erfindungsgemäßen Beugungsstruktur sind die zweiten Gitterstrukturelemente in Form von Streifen, insbesondere von senkrechten oder waagrechten Streifen, in den nebengeordneten Flächenbereichen der ersten Gitterstrukturelemente angeordnet. Auch eine Anordnung schräger Streifen kommt infrage. Alternativ können die zweiten Gitterstrukturelemente in Form gleichartig oder ungleichartig gestalteter Teilbereiche, insbesondere in Form rechteckiger Teilbereiche, in den nebengeordneten Flächenbereichen der ersten Gitterstrukturelemente angeordnet sein. Die Teilbereiche der zweiten Gitterstrukturelemente können auch völlig unregelmäßig geformte Umrisse aufweisen oder auch die Form beliebiger Zeichen und/ oder Muster haben.

Die Breite der Streifen oder eine charakteristische Abmessung der Teilbereiche liegt bevorzugt unterhalb der Auflösungsgrenze des bloßen Auges, so dass die Aufteilung in Streifen oder Teilbereiche bei Betrachtung des primären Hologramms nicht erkennbar ist.

In einer Erfindungsvariante sind nebeneinander liegende Streifen oder nebeneinander liegende Teilbereiche nebeneinander liegenden Bildpunkten der versteckten Bildinformation zugeordnet. Alternativ können solche Streifen oder Teilbereiche auch Bildpunkten zugeordnet sein, die übernächste, drittnächste, viertnächste oder noch weiter entfernte Nachbarn sind. Je nach Anwendungsfall kann dadurch im ersten Fall vorteilhaft erreicht werden, dass auch bei Beleuchtung nur eines Teils der Streifen eines versteckten Bildmotivs zusammenhängende Teilbereiche des Motivs auf dem Schirm erzeugt werden. Im letzteren Fall wird vorteilhaft sichergestellt, dass auch bei nur teilweiser Beleuchtung der Streifen zumindest ein vergröberter Umriss des gesamten versteckten Bildmotivs erkennbar wird.

Die zweiten Gitterstrukturelemente sind mit Vorteil in unbelegten Bereichen der ersten Bildelemente oder Gitterstrukturelemente angeordnet, in denen keine Bildanteile der offenen Bildinformation abgelegt sind. Eine weitere Möglichkeit besteht darin, die ersten Bildelemente und die zweiten Gitterstrukturelemente so zu überlagern, dass entweder die offene oder die versteckte Bildinformation bereichsweise zugeschüttet wird. Diese Bereiche werden dabei so gewählt, dass ihr Fehlen in der offenen Bildinformation des primären Hologramms nicht störend auffällt.

In einigen Ausgestaltungen ist die offene Bildinformation nicht aus allen Richtungen erkennbar, sondern für eine gewisse, vorgegebene Betrachtungsrichtung ausgelegt. Die Betrachtungsrichtung der versteckten Bildinformation ist dann mit Vorteil senkrecht oder parallel zur ersten Betrachtungsrichtung ausgelegt. Im letzteren Fall erscheinen die Hidden Image-Bereiche aus der Betrachtungsrichtung der offenen Bildinformation weißlich oder pastellfarben, während sie im ersteren Fall wie unbelegte Flächen wirken.

In einem zweiten Aspekt weist eine Beugungsstruktur erste Gitterstrukturelemente auf, die die offene Bildinformation erzeugen, und zweite Gitterstrukturelemente, die die versteckte Bildinformation erzeugen, wobei die zweiten Gitterstrukturelemente mit den ersten Gitterstrukturelementen flächig verschachtelt sind. Wie beim ersten Aspekt ist dabei insbesondere die offene Bildinformation unter ambienten Beleuchtungsbedingungen der Beugungsstruktur sichtbar, während die versteckte Bildinformation unter ambienten Beleuchtungsbedingungen nicht erkennbar ist und nur bei gerichteter, im Wesentlichen einfarbiger Beleuchtung der Beugungsstruktur mit einem Schirm auffangbar ist.

Die versteckte Bildinformation ist vorzugsweise aus einer Mehrzahl einzelner Bildpunkte zusammengesetzt, wobei die zweiten Gitterstrukturelemente zweckmäßig jeweils einem der Bildpunkte zugeordnet sind und ein Gittermuster mit einer solchen Gitterkonstante und Winkelorientierung enthalten, dass gerichtete, im Wesentlichen einfarbige Beleuchtung in eine für den zugeordneten Bildpunkt charakteristische Richtung gebeugt wird.

Die ersten und zweiten Gitterstrukturelemente sind nach einer bevorzugten Ausgestaltung in Form schmaler Streifen alternierend nebeneinander angeordnet. Die Streifen können dabei senkrecht, waagrecht oder auch in beliebiger Richtung angeordnet sein. Alternativ sind die zweiten Gitterstrukturelemente in beliebig geformten, kleinen Lücken im Flächenbereich der ersten Gitterstrukturelemente angeordnet. Die Lücken sind vorzugsweise in Form gleichartig oder ungleichartig geformter Teilbereiche, insbesondere als quadratische, rechteckige, runde, ovale, wabenförmige, polygonal begrenzte oder puzzleartige Teilbereiche ausgebildet. Um die offene Bildinformation möglichst wenig zu stören, liegt die Breite der Streifen oder eine charakteristische Abmessung der Teilbereiche mit Vorteil unterhalb der Auflösungsgrenze des bloßen Auges.

Analog zum ersten Erfindungsaspekt können nebeneinander liegende Streifen oder nebeneinander liegende Teilbereiche nebeneinander liegenden Bildpunkten, übernächsten, drittnächsten, viertnächsten oder noch weiter entfernten Bildpunkten der versteckten Bildinformation zugeordnet sein.

Ist die offene Bildinformation für eine vorgegebene Betrachtungsrichtung ausgelegt, so wird die Betrachtungsrichtung der versteckten Bildinformation mit Vorteil auf eine zweite vorgegebene Betrachtungsrichtung senkrecht zur ersten Betrachtungsrichtung ausgelegt, um einen bei dieser Ausgestaltung bei paralleler Ausrichtung auftretenden weißlichen Schleier über dem primären Hologramm zu vermeiden.

In einem weiteren Aspekt weist eine Beugungsstruktur Gitterstrukturelemente auf, die die versteckte Bildinformation erzeugen, wobei die offene Bildinformation durch die Form und Lage dieser Gitterstrukturelemente gebildet ist.

Auch bei diesem Aspekt ist insbesondere die offene Bildinformation unter ambienten Beleuchtungsbedingungen der Beugungsstruktur sichtbar, während die versteckte Bildinformation unter ambienten Beleuchtungsbedingungen nicht erkennbar ist und nur bei gerichteter, im Wesentlichen einfarbiger Beleuchtung der Beugungsstruktur mit einem Schirm auffangbar ist. Die versteckte Bildinformation ist vorzugsweise aus einer Mehrzahl einzelner Bildpunkte zusammengesetzt, wobei die Gitterstrukturelemente zweckmäßig jeweils einem der Bildpunkte zugeordnet sind und ein Gittermuster mit einer solchen Gitterkonstante und Winkelorientierung enthalten, dass gerichtete, im Wesentlichen einfarbige Beleuchtung in eine für den zugeordneten Bildpunkt charakteristische Richtung gebeugt wird.

Die Gitterstrukturelemente sind beispielsweise in Form von Streifen, insbesondere von senkrechten oder waagrechten Streifen, oder in Form gleichartig oder ungleichartig gestalteter Teilbereiche, insbesondere in Form rechteckiger Teilbereiche, ausgebildet, deren Breite oder charakteristische Abmessung mit Vorteil unterhalb der Auflösungsgrenze des bloßen Auges liegt.

In allen genannten Aspekten kann die offene und/ oder die versteckte Bildinformation jeweils im Wesentlichen über die Gesamtfläche der Struktur verteilt sein.

Auch können in allen Aspekten die Gitterstrukturelemente, die die versteckte Bildinformation erzeugen, in unterschiedlichen Flächenanteilen vorgesehen sein. Dadurch können die zugeordneten Bildpunkte der versteckten Bildinformation mit unterschiedlichen Helligkeiten belegt werden, so dass sich beispielsweise Graustufenbilder als versteckte Bildinformation erzeugen lassen. Die unterschiedlichen Flächenanteile können beispielsweise dadurch realisiert werden, dass die Gitterstrukturelemente durch Streifen unterschiedlicher Breite oder durch regelmäßig oder unregelmäßig geformte Teilbereiche verschiedener Größe gebildet sind.

Die offene Bildinformation stellt vorzugsweise ein Hologramm, ein holographisches Gitterbild oder eine andere hologrammähnliche Beugungsstruktur dar. Die versteckte Bildinformation stellt beispielsweise eine Umriss- oder Strichzeichnung oder einen Schriftzug dar, da diese gegenüber flächigen Bildmotiven in der Regel weniger Bildpunkte benötigen. Bei einer kleinen Anzahl an Bildpunkten steigt grundsätzlich die Helligkeit pro Bildpunkt. Weniger Bildpunkte erzeugen auch ein gegenüber Störungen unempfindlicheres verstecktes Bild. Zudem erzeugt eine kleine Bildpunktzahl eine kurze Wiederholungsperiode in der offenen Bildinformation und stört diese somit nur wenig. Auf der anderen Seite können die Streifenbreiten und/ oder Streifenabschnitte größer gewählt werden, um weniger Übergangszonen zu erzeugen, die unter Umständen die Effektivität reduzieren. Nicht zuletzt ermöglicht eine geringe Bildpunktzahl Gestaltungen, bei denen mehrere Teilbilder in der versteckten Bildinformation integriert sind.

In einer Weiterbildung der erfindungsgemäßen Beugungsstruktur ist vorgesehen, dass die versteckte Bildinformation mehrere Teilbildinformationen enthält, die bei Beleuchtung unterschiedlicher zugeordneter Teilbereiche der Beugungsstruktur erzeugt werden.

Die Teilbildinformationen können beispielsweise eine Bewegungsreihe eines Bildmotivs enthalten, so dass beim aufeinander folgenden Beleuchten der zugehörigen Teilbereiche ein Bewegungsablauf des Motivs erzeugt wird. Enthalten die Teilbildinformationen eine sich vergrößernde oder verkleinernde Umrisslinie eines Bildmotivs, so wird beim aufeinander folgenden Beleuchten der zugehörigen Teilbereiche ein Pumpbild des Motivs erzeugt. Nach einer weiteren Möglichkeit enthalten die Teilbildinformationen eine Überlagerung von zumindest zwei Bildmotiven, so dass beim aufeinander folgenden Beleuchten der zugehörigen Teilbereiche eine Überblendung zwischen den Bildmotiven erzeugt wird. Die Teilbildinformationen können auch ein Bildmotiv in unterschiedlichen Helligkeitsstufen enthalten, so dass beim aufeinander folgenden Beleuchten der Teilbereiche eine Einblendung, Ausblendung und/ oder ein Blinken des Bildmotivs erzeugt wird. Enthält die Teilbildinformation ein Bildmotiv in verschiedenen Ansichten aus unterschiedlichen Betrachtungsrichtungen, so wird beim aufeinander folgenden Beleuchten der Teilbereiche eine attraktive räumlich variierende Ansicht des Bildmotivs erzeugt.

Die Erfindung enthält auch ein Sicherheitselement mit einer optisch variablen Beugungsstruktur der oben beschriebenen Art. Das Sicherheitselement kann insbesondere ein Sicherheitsfaden, ein Etikett oder ein Transferelement sein. Die Erfindung enthält weiter ein Sicherheitspapier mit einer optisch variablen Beugungsstruktur der beschriebenen Art oder einem oben angegebenen Sicherheitselement. Ferner umfasst die Erfindung einen Datenträger, der mit einer optisch variablen Beugungsstruktur der beschriebenen Art versehen ist. Die Beugungsstruktur kann dabei entweder direkt auf dem Datenträger aufgebracht sein oder der Datenträger kann ein Sicherheitselement oder Sicherheitspapier mit einer erfindungsgemäßen Beugungsstruktur umfassen. Bei dem Datenträger kann es sich insbesondere um eine Banknote, ein Wertdokument, einen Pass, eine Ausweiskarte oder eine Urkunde handeln.

Bei einem Verfahren zum Erzeugen einer optisch variablen Beugungsstruktur mit einer offenen und einer versteckten Bildinformation werden erste und zweite Gitterstrukturelemente bestimmt, die die offene bzw. die versteckte Bildinformation erzeugen. Erfindungsgemäß werden dabei die zweiten Gitterstrukturelemente im Wesentlichen über die Gesamtfläche der Struktur verteilt in nebengeordneten Flächenbereichen der ersten Gitterstrukturelemente angeordnet, welche für die Darstellung der offenen Bildinformation von untergeordneter Bedeutung sind.

Bei einem anderen Verfahren zum Erzeugen einer solchen optisch variablen Beugungsstruktur werden die zweiten Gitterstrukturelemente im Wesentlichen über die Gesamtfläche der Struktur verteilt mit den ersten Gitterstrukturelementen flächig verschachtelt.

Bei einem weiteren Verfahren zum Erzeugen einer optisch variablen Beugungsstruktur mit einer offenen und einer versteckten Bildinformation, bei dem Gitterstrukturelemente bestimmt werden, die die versteckte Bildinformation erzeugen, werden erfindungsgemäß die Gitterstrukturelemente im Wesentlichen über die Gesamtfläche der Struktur verteilt angeordnet, wobei die Form und Lage der Gitterstrukturelemente die offene Bildinformation bildet.

Bei allen Verfahren können die ersten und zweiten Gitterstrukturelemente mit demselben Herstellungsprozess, vorzugsweise mit Elektronenstrahllithographie, Direct Laser Writing, optischer Lithographie, im Holomax-Verfahren oder Dot-Matrix-Verfahren erzeugt werden.

Die offene Bildinformation kann erfindungsgemäß nicht nur als Hologramm oder hologrammartiges Gitterbild vorliegen, sondern auch als Überdruckung über dem Hidden Image oder als Aussparung im Hidden Image vorliegen.

In ersten Fall wird beispielsweise zunächst nur ein Hidden Image erzeugt und auf das endgültige Substrat, beispielsweise ein Banknotenpapier, übertragen. Im Zuge der Bedruckung des Substrats, beispielsweise beim Banknotendruck, kann eine offene Information neben oder über das Hidden Image gedruckt, so dass Teile des Hidden Image unversehrt bleiben und wie oben beschrieben nachgewiesen werden können. Als Druckverfahren kommen alle üblichen Druckverfahren infrage, insbesondere Offsetdruck, Hochdruck, Tiefdruck, Siebdruck, Inkjet-Verfahren oder Laserdruck.

Grundsätzlich verläuft der Herstellungsprozess einer Prägestruktur von der Belichtung bis zum fertigen Produkt folgendermaßen: Unabhängig davon, ob man in einem ersten Schritt eine holographische Belichtung vornimmt oder ein holographisches Dot-Matrix-Verfahren, eine optische Lithographie wie beispielsweise beim Holomax-Verfahren, oder eine Elektronenstrahl-lithographie durchführt, wird zunächst eine auf einem Träger aufgebrachte Schicht eines strahlungsempfindlichen Polymers bestrahlt und entwickelt, wobei in einer Oberflächenschicht der Polymerschicht die Beugungsstruktur als Relief entsteht. Von diesem Relief wird eine galvanische Abformung hergestellt, so dass das Relief anschließend in Metall vorliegt und als Prägestempel verwendet werden kann.

Ein solcher Prägestempel wird im Allgemeinen nicht mit nur einem Beugungsstrukturrelief hergestellt, sondern er wird durch geeignetes Zusammensetzen der Reliefs mit einer Vielzahl gleichartiger Beugungsstrukturreliefs hergestellt. Mithilfe eines solchen Prägestempels kann dann eine mit prägbarem Lack beschichtete Folienrolle gleichzeitig mit vielen Beugungsstrukturreliefs versehen werden. Diese Reliefs können für Betrachtung in Aufsicht oder in Durchsicht konfiguriert werden. Für die Betrachtung in Aufsicht werden sie in einem nachfolgenden Bedampfungsschritt mit einer dünnen reflektierenden Metallschicht oder mit einer dielektrischen Schicht versehen. Auf die Metallschicht oder die dielektrische Schicht wird noch eine Schutzschicht aufgebracht. Damit liegt eine Folienrolle mit einer Vielzahl gleichartiger Beugungsstrukturen vor, die ausgeschnitten oder auf andere Weise getrennt und auf ein gewünschtes Objekt aufgeklebt werden können. Für die Betrachtung in Durchsicht werden vorzugsweise keine weiteren Schichten auf die Reliefoberfläche aufgebracht, so dass die Reliefstruktur als Berg- und Talstruktur an der Oberfläche erhalten bleibt.

Anstelle der Folienbeugungsstrukturen können auch Transferbeugungsstrukturen hergestellt werden, indem man in einem speziellen Verfahren die Lackschicht einschließlich des Reliefs, der aufgedampften Schicht und der Schutzschicht von der Folie abzieht und auf das gewünschte Objekt überträgt.

Eine Beugungsstruktur mit transparenten Aussparungen erhält man, wenn die oben genannte dünne Metallschicht entsprechend bearbeitet wird. In einer bevorzugten Ausführungsform druckt man dazu auf die Metallschicht eine Ätzfarbe im Muster der gewünschten Aussparungen. Dadurch wird das Metall an den entsprechenden Stellen ab- oder aufgelöst. Die Rückstände werden wegwischt und erst dann wird eine Schutzschicht aufgebracht. Die weitere Bearbeitung erfolgt dann wie oben beschrieben. Alternativ kann die Metallschicht auch mittels eines Lasers in Form von Mustern oder Zeichen abgetragen werden. Bei einem weiteren Verfahren kann unter der Metallschicht eine lösliche Druckfarbe in Form der späteren Aussparungen aufgedruckt werden. Nach der Metallisierung wird die Farbe gelöst und die darüber liegende Metallschicht im Bereich der Farbe mit abgelöst.

Informationshaltige transparente Aussparungen in der Beugungsstruktur können erfindungsgemäß ebenfalls die offene Bildinformation bilden. Die Aussparungen werden dazu beispielsweise dadurch erzeugt, dass nach der Metallbedampfung eine Ätzfarbe in Form des Designs der offenen Information aufgedruckt wird, die die Metallschicht lokal entfernt, so dass die offene Bildinformation in Durchsicht gut erkennbar ist. Wird ein Hidden Image in dieser Weise behandelt, so kann es durch Reflexion an den verbleibenden Resten der Metallschicht nachgewiesen werden.

Zur Erzeugung der offenen Information kommen natürlich auch weitere Verfahren infrage, wie beispielsweise die Laserpersonalisierung. Hierbei wird nach Fertigstellung eines Dokuments, etwa einer Kreditkarte, welches das Hidden Image enthält, die offene Information, beispielsweise ein Text oder eine Ziffernfolge, mit einem Laser in das Dokument geschrieben. Insbesondere wird durch die Laserbestrahlung eine Metallschicht abgetragen oder eine Farbänderung in dem Dokument erzeugt. Beispielsweise kann die Information durch Einbrennen mit einem starken Laser als schwarze Schrift vor dem metallischen Hintergrund des Hidden Image erscheinen, welches wie oben beschrieben nachgewiesen werden kann. Die genannten Beispiele zeigen, dass praktisch beliebig angebrachte offene Bildinformationen mit den versteckten Bildinformationen kombiniert werden können.

Zur Bestimmung der Gitterparameter der Gitterstrukturelemente wird bevorzugt die Geometrie eines Auffangschirms vorgegeben, auf dem die versteckte Bildinformation bei gerichteter, im Wesentlichen einfarbiger Beleuchtung erscheinen soll, und auf Grundlage der Schirmgeometrie unter Verwendung der Beziehung

$$\vec{n} \times \left( \vec{k}' - \vec{k} \right) = m\vec{g}$$

eine Gitterkonstante und eine Winkelorientierung für die Gitterstrukturelemente berechnet, die die versteckte Bildinformation erzeugen. Dabei stellen $\overline{n, k'}$, und $\vec{k}$ den Normalenvektor auf dem Gitter, den Projektionsvektor und den Beleuchtungsvektor, m die Beugungsordnung und $\vec{g}$ einen Gittervektor dar. Die genaue Bedeutung und Definition der auftretenden Größen wird weiter unter ausführlich erläutert.

Die Erfindung umfasst weiter ein Verfahren zum Erzeugen einer optisch variablen Beugungsstruktur, die eine aus einer Mehrzahl von Bildpunkten zusammengesetzte versteckte Bildinformation enthält, wobei bei dem Verfahren

- die Geometrie eines Auffangschirms vorgegeben wird, auf dem die versteckte Bildinformation erscheint,

- die Art der Beleuchtung vorgegeben wird, insbesondere die Wellenlänge und Richtung der Beleuchtung, welche die versteckte Bildinformation auf dem Auffangschirm erzeugt,

- für jeden der Bildpunkte auf Grundlage der Schirmgeometrie und unter Verwendung der Beziehung $\vec{n} \times (\vec{k}' - \vec{k}) = m\vec{g}$ eine Gitterkonstante und eine Winkelorientierung bestimmt werden, wobei $\overline{n, k'}$, und $\vec{k}$ den Normalenvektor auf dem Gitter, den Projektionsvektor und den Beleuchtungsvektor, m die Beugungsordnung und $\vec{g}$ einen Gittervektor darstellen, und

- in einem Substrat eine optisch variable Beugungsstruktur mit einem Nebenbereich erzeugt wird, der durch eine Mehrzahl von Unterbereichen gebildet wird, welche jeweils einem der Bildpunkte zugeordnet sind und die jeweils mit einem Gittermuster gefüllt werden, dessen Gitterkonstante und Winkelorientierung durch die für den zugeordneten Bildpunkt bestimmte Gitterkonstante und Winkelorientierung gegeben sind.

In einer Weiterbildung des erfindungsgemäßen Verfahrens ist vorgesehen, dass zusätzlich ein Hauptbereich vorgegeben wird, der eine offene Bildinformation unter ambienten Beleuchtungsbedingungen zeigt. Die optisch variable Beugungsstruktur setzt sich dabei so aus Hauptbereich und Nebenbereich zusammen, dass die offene Bildinformation im Hauptbereich und die versteckte Bildinformation im Nebenbereich realisiert wird.

In vorteilhaften Ausgestaltungen wird der Hauptbereich in Form eines Hologramms, eines holographischen Gitterbildes oder einer anderen hologrammähnlichen Beugungsstruktur, eines Druckbildes, einer informationshaltigen Aussparung in einer opaken oder reflektierenden Schicht oder einer Laserbeschriftung ausgebildet. Der Nebenbereich kann in dem Substrat unter, neben oder auf dem Hauptbereich erzeugt werden.

Bei einem Verfahren zur Echtheitsprüfung eines Sicherheitselements, eines Sicherheitspapiers oder eines Datenträgers der oben beschriebenen Art werden unter vorgegebenen Beleuchtungsbedingungen Lichtstrahlen von Gitterstrukturelementen einer Beugungsstruktur gebeugt, wobei die Gitterstrukturelemente eine versteckte Bildinformation auf einem Auffangschirm erzeugen. Die Geometrie des Auffangschirms ist dabei so gestaltet, dass die von den Gitterstrukturelementen gebeugten Lichtstrahlen von dem Auffangschirm zu einem Betrachter hin reflektiert werden. Die Echtheit des geprüften Sicherheitselements wird dann auf Grundlage der auf dem Auffangschirm erzeugten versteckten Bildinformation beurteilt. Vorteilhaft kann die Schirmgeometrie durch ein Ellipsoid gebildet werden, wobei der Auftreffpunkt der Lichtstrahlen auf die Gitterstrukturelemente in einem Brennpunkt und das Auge des Betrachters in dem anderen Brennpunkt liegt. Alternativ kann die Schirmgeometrie auch durch eine Fläche mit parabolischem oder kreisförmigem Querschnitt gebildet werden.

Bei einem alternativen Verfahren zur Echtheitsprüfung eines Sicherheitselements, eines Sicherheitspapiers oder eines Datenträgers der oben beschriebenen Art bildet der Auffangschirm die Rückseite einer Feldlinse. Die Feldlinse ist dabei derart gestaltet, dass die von den Gitterstrukturelementen gebeugten Lichtstrahlen die Feldlinse so durchstoßen, dass die versteckte Bildinformation auf dem die Rückseite der Feldlinse bildenden Auffangschirm erzeugt wird.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet. Soweit im Folgenden keine anders lautenden Ausführungen dazu gemacht werden, sind die anhand der Figuren erläuterten Ausführungsbeispiele sowohl für die Betrachtung in Aufsicht als auch für die Betrachtung in Durchsicht geeignet.

Es zeigen:

Fig. 1 eine schematische Darstellung einer Banknote mit einem einge- betteten Sicherheitsfaden nach einem Ausführungsbeispiel der Erfindung,

Fig. 2 den Sicherheitsfaden der Fig. 1 im Querschnitt,

Fig. 3 die grundsätzliche Gestaltung einer erfindungsgemäßen Beu- gungsstruktur und die geometrischen Verhältnisse bei der Pro- jektion der versteckten Information auf einen Auffangschirm, (a) für Auflicht und Betrachtung in Aufsicht und (b) für Durch- licht und Betrachtung in Durchsicht,

Fig. 4 eine optisch variable Beugungsstruktur nach einem Ausfüh- rungsbeispiel der Erfindung, wobei (a) die offene Bildinforma- tion und (b) die Beugungsstruktur mit teilweise gefüllten Git- terstrukturelementen für die Erzeugung der versteckten Bildin- formation zeigt,

Fig. 5 und 6 zwei Beugungsstrukturen wie in Fig. 4 mit alternativen Anord- nungen der Gitterstrukturelemente zur Erzeugung der ver- steckten Bildinformation,

Fig. 7 eine Beugungsstruktur nach einem weiteren Ausführungsbei- spiel der Erfindung, bei dem die Bildpunkte der versteckten Bildinformation mit unterschiedlichen Helligkeiten belegt sind,

Fig. 8 eine Beugungsstruktur wie in Fig. 7 mit einer alternativen An- ordnung der Gitterstrukturelemente zur Erzeugung der ver- steckten Bildinformation,

Fig. 9 eine beispielhafte Beugungsstruktur, wobei (a) das primäre Hologramm zeigt, (b) das in schmale Streifen aufgeteilte Hologramm und (c) die flächige Verschachtelung des primären Hologramms mit dem Hidden Image,

Fig. 10 eine beispielhafte Beugungsstruktur, bei dem die offene Bildinformation durch die Form und Lage der die versteckte Bildinformation erzeu- genden Gitterstrukturelemente gebildet wird,

Fig. 11 eine Beugungsstruktur wie in Fig. 4, bei der der Hidden Image- Bereich in mehrere Abschnitte unterteilt ist, die verschiedene Teilbildinformationen enthalten,

Fig. 12 eine schematische Darstellung der Beugung eines Laserstrahls an einer erfindungsgemäßen Beugungsstruktur (a) bei Betrach- tung in Aufsicht und (b) bei Betrachtung in Durchsicht,

Fig. 13 in (a) die in der Beugungsstruktur von Fig. 12 versteckte Bildin- formation, wie sie auf dem Auffangschirm erscheint, und in (b) die Positionen der durchnummerierten Bildpunkte der ver- steckten Bildinformation, und

Fig. 14 in (c) eine beispielhafte Beugungsstruktur, wobei (a) lediglich die offene Bild- information und (b) lediglich die teilweise gefüllten Gitterstruk- turelemente zur Erzeugung der versteckten Bildinformation zeigt,

Fig. 15 eine Beugungsstruktur wie in Fig. 4, bei der der Hidden Image- Bereich in unregelmäßig geformte Teilbereiche unterteilt ist, welche Gitterstrukturelemente zur Erzeugung der versteckten Bildinformation enthalten,

Fig. 16 zwei Beugungsstrukturen mit alternativen Anordnungen der Gitterstrukturelemente zur Erzeugung der versteckten Bildin- formation, wobei in (a) ein Hidden Image-Bereich dargestellt ist, der in Teilbereiche unterteilt ist, die in Form von Zeichen und/ oder Mustern ausgebildet sind, und in (b) ein Hidden Image-Bereich dargestellt ist, der in Teilbereiche unterteilt ist, in denen Zeichen und/ oder Muster ausgespart sind,

Fig. 17 in (a) eine Anordnung zur Betrachtung einer versteckten Bildin- formation, in der der Auffangschirm derart geformt ist, dass die auftreffenden Lichtstrahlen zum Betrachter hin reflektiert wer- den, in (b) eine Anordnung zur Betrachtung einer versteckten Bildinformation, in der der Auffangschirm mit einer Feldlinse derart gekoppelt ist, dass die von der versteckten Bildinforma- tion ausgehenden Strahlen ins Auge des Betrachters gelenkt werden.

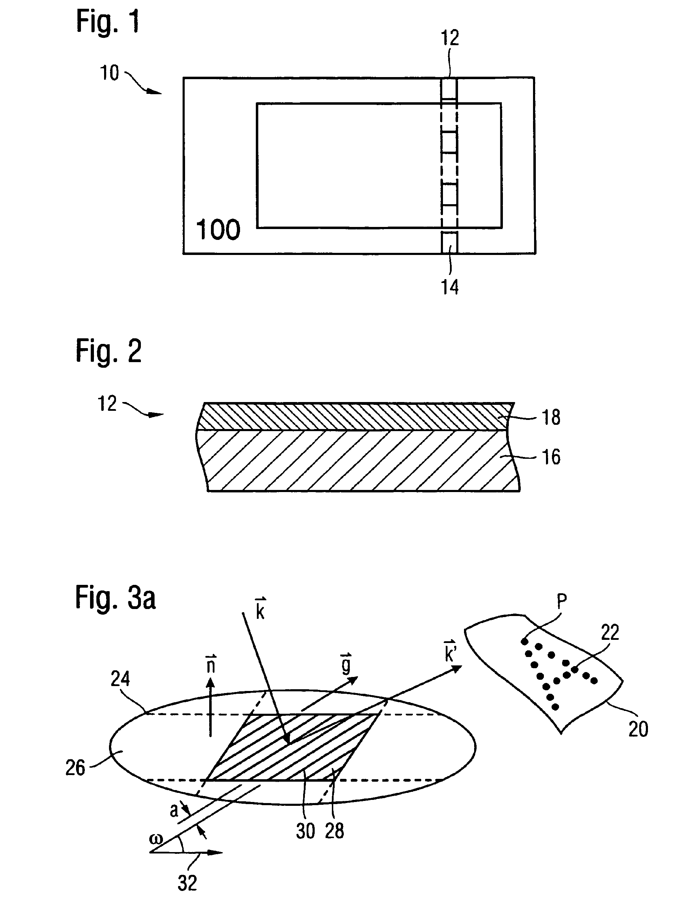

Fig. 1 zeigt eine schematische Darstellung einer Banknote 10, die als Beispiel eines erfindungsgemäßen Sicherheitselements einen Sicherheitsfaden 12 aufweist. Der Sicherheitsfaden 12 ist als Fenstersicherheitsfaden ausgebildet, der an bestimmten Fensterbereichen 14 an der Oberfläche der Banknote 10 hervortritt, während er in den dazwischen liegenden Bereichen im Inneren der Banknote 10 eingebettet ist. Je nachdem, ob der Sicherheitsfaden 12 nur an einer Seite der Banknote 10 an die Oberfläche tritt oder ob die Fensterbereiche als durchgehende Löcher im Papier ausgestaltet sind, kann der Sicherheitsfaden mit für Aufsicht oder für Durchsicht geeigneten Beugungsstrukturen versehen sein.

Fig. 2 zeigt den prinzipiellen Schichtaufbau des Sicherheitsfadens 12 im Querschnitt. Der Sicherheitsfaden 12 enthält eine Trägerschicht 16, beispielsweise eine Kunststofffolie, auf der der Schichtaufbau 18 des Sicherheitselements mit der erfindungsgemäßen optisch variablen Beugungsstruktur aufgebracht ist. Es versteht sich, dass der Sicherheitsfaden 12 weitere Schichten und/ oder weitere Sicherheitsmerkmale, wie etwa Lumineszenzstoffe oder magnetische Stoffe, aufweisen kann, die jedoch für die vorliegende Erfindung nicht wesentlich sind und daher nicht näher beschrieben werden.

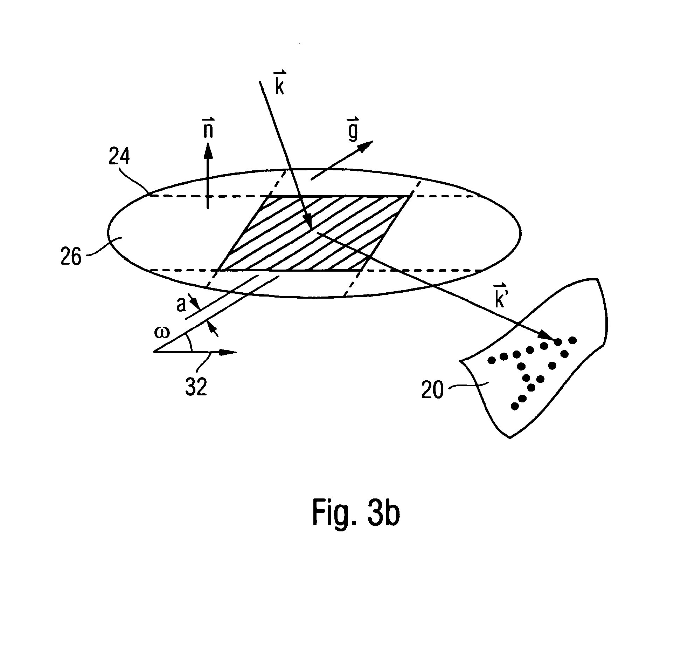

Die grundsätzliche Gestaltung einer erfindungsgemäßen Beugungsstruktur, Schritte bei seiner Erzeugung und die Sichtbarmachung versteckter Bildinformationen wird nun mit Bezug auf Fig. 3 erläutert, die die geometrischen Verhältnisse bei der Projektion der versteckten Information auf einen Auffangschirm darstellt. Fig. 3(a) zeigt dabei die bei Auslegung für Auflicht und Aufsicht vorliegenden Verhältnisse, während Fig. 3(b) die bei Auslegung für Durchlicht und Durchsicht gegebenen Verhältnisse zeigt.

Für jede Beugungsstruktur wird zunächst festgelegt, mit welcher Art von Auffangschirm 20 die versteckte Information aufgefangen werden soll. Bei dem Schirm 20 kann es sich um eine beliebige geformte Fläche, beispielsweise ein Ebenenstück, ein Zylindermantelstück oder auch ein allgemein durch einen funktionellen Zusammenhang F(x,y,z)= 0 beschriebene Fläche handeln. Dann wird die zu erzeugende versteckte Information festgelegt, im vereinfachten Ausführungsbeispiel der Fig. 3 der Buchstabe "A". Die versteckte Information wird dabei aus einer Mehrzahl einzelner Bildpunkte 22 zusammengesetzt, die gemeinsam die gewünschte Information bilden.

Die Beugungsstruktur 24 enthält eine Mehrzahl von Gitterstrukturelementen 26, die zur Erzeugung der ver- steckten Information mit einem Gittermuster gefüllt sind. Wie weiter unten im Detail erläutert, können diese Gitterstruk- turelemente in verschiedener Weise mit anderen Gitterstrukturelementen oder sonstigen Designelementen, die die offene Bildinformation erzeugen, kombiniert sein. Jedes der die versteckte Bildinformation erzeugenden Gitterstrukturelemente 26 ist einem der Bildpunkte 22 zugeordnet, beispielsweise ist das Gitterstrukturelement 28 dem Bildpunkt P zugeordnet.

Das Gittermuster jedes Gitterstrukturelements 28 ist durch zwei Gitterparameter charakterisiert ist, nämlich durch die Gitterkonstante a und den Azimutwinkel $\omega$, der den Winkel angibt, den die Gitterlinien 30 des Gittermusters mit einer Referenzrichtung 32 einschließen. Diese beiden Angaben können auch durch den Gittervektor $\vec{g}$ dargestellt werden, der einen Vektor der Länge $2\pi/a$ darstellt, der in Richtung parallel zu den Gitterlinien zeigt. Die Orientierung des Gitterstrukturelements im Raum wird durch den Normalenvektor $\vec{n}$ angegeben, der einen Vektor der Länge 1 darstellt, der senkrecht auf der Gitterebene steht.

Das einfallende monochromatische Licht mit Wellenlänge $\lambda$ wird durch den Beleuchtungsvektor $\vec{k}$ charakterisiert, der einen Vektor der Länge $2\pi/\lambda$ darstellt, der von der Lichtquelle zum Gitterstrukturelement 28 zeigt. Der Projektions- vektor $\vec{k}'$ ist ein Vektor der Länge $2\pi/\lambda$, der vom Gitterstrukturelement 28 zum zugeordneten Punkt P auf dem Auffangschirm 20 zeigt.

Die auftretenden Größen sind nun durch die oben angegebene Beziehung

$$\vec{n} \times \left(\vec{k}' - \vec{k}\right) = m\vec{g} \qquad (1)$$

miteinander verknüpft, wobei $m$ eine ganze Zahl, insbesondere +1 oder -1 darstellt. Dies erlaubt die direkte Berechnung der Gitterparameter a und $\omega$ aus der Angabe der Schirmgeometrie, der Position der Bildpunkte 22 auf dem Schirm 20 und der Beleuchtungsbedingungen, also dem Beleuchtungsvektor $\vec{k}$, der die Wellenlänge des einfallenden Lichts und die Beleuchtungsrichtung enthält. Die Gitterstrukturelemente 26 können so mit Gittermustern gefüllt werden, die bei im Wesentlichen einfarbiger Beleuchtung mit Wellenlänge $\lambda$ aus Richtung $\vec{k}$ gerade die gewünschte versteckte Bildinformation 22 auf dem Auffangschirm 20 erzeugen.

Zur Durchführung der Berechnung einer erfindungsgemäßen Hidden Image-Beugungsstruktur kann ein Koordinatensystem benutzt werden, bei dem die Beugungsstruktur im Nullpunkt des Koordinatensystems liegt, der Gitternormalenvektor in z-Richtung zeigt und der Gittervektor mit der y-Achse den Winkel $\omega$ bildet. Wenn nun ein Laser mit der Wellenlänge der sich in der Position (x, y, z) befindet, einen Punkt an der Position (x', y', z') auf einem Auffangschirm aufleuchten lassen soll, so lassen sich aus der vorstehenden Vektorformel (1) die folgenden Beziehungen für die Gitterparameter herleiten:

$$\tan \omega = -\frac{g_x}{g_y} \qquad a = \frac{2\pi}{\sqrt{g_x^2 + g_x^2}} \qquad (2)$$

wobei $g_x$ und $g_y$ die Komponenten des Gittervektors sind. Diese lassen sich wie folgt berechnen:

$$g_x = -\frac{2\pi}{m\lambda}\left(\frac{y'}{c'} + \frac{y}{c}\right) \qquad g_y = \frac{2\pi}{m\lambda}\left(\frac{x'}{c'} + \frac{x}{c}\right) \qquad g_z = 0$$

wobei c und c' die Abstände der Lichtquelle bzw. des aufleuchtenden Punktes vom Nullpunkt sind. Die Abstände c und c' sind gegeben durch:

$$c = \sqrt{x^2 + y^2 + z^2}, \qquad c' = \sqrt{x'^2 + y'^2 + z'^2}.$$

Die Schirmgeometrie, d.h. die Gestalt und Lage des Auffangschirms kann nach unterschiedlichen Gesichtspunkten gewählt werden.

Wird das Hidden Image als Sicherheitsmerkmal verwendet, so kann die Sicherheit beispielsweise dadurch erhöht werden, dass die Hidden Image-Beugungsstruktur mithilfe der vorstehenden Beziehungen (1) und (2) für eine bestimmte Schirmgeometrie berechnet wird. Das so berechnete und ausgeführte Hidden Image kann dann nur auf einem Schirm dieser Geometrie in der berechneten Gestalt unverzerrt aufgefangen werden. Wird es auf einem Schirm anderer Gestalt oder Lage aufgefangen, so wird es verzerrt abgebildet.

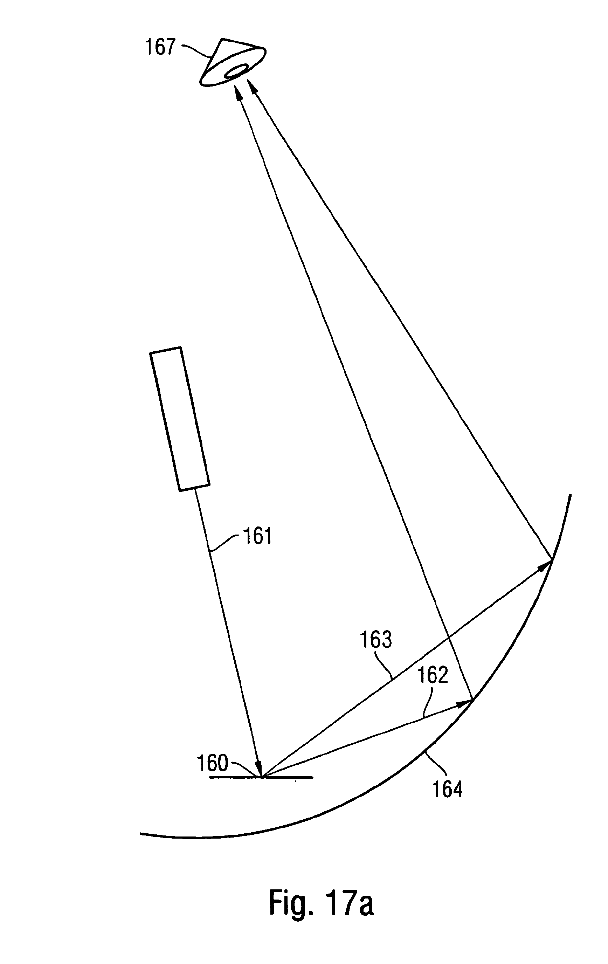

Eine weitere Möglichkeit besteht darin, die Schirmgeometrie so zu wählen, dass die Helligkeit erhöht wird, mit der das Hidden Image auf dem das einfallende Licht streuenden Auffangsschirm aufleuchtet. Bei Betrachtung des Auffangschirms von vorne lässt sich die höchstmögliche Helligkeit erhalten, wenn der Auffangschirm eine Form hat, welche die auftreffenden Strahlen zum Betrachter hin reflektiert, wie in Fig. 17(a) schematisch dargestellt. Der einfallende Lichtstrahl 161 trifft auf das Hidden Image 160, welches Gitterstrukturelemente enthält, die so berechnet sind, dass sie auf dem gekrümmten und Licht streuenden Auffangschirm 164 ein gewünschtes Bild erzeugen. Dabei weist der Auffangschirm eine Geometrie auf, welche die von der Position des Auftreffpunktes des Laserstrahls 161 auf das Hidden Image 160 ausgehenden Strahlen 162,163 zum Betrachter 167 hinlenkt.

Eine bevorzugte Schirmgeometrie wird durch ein Ellipsoid gebildet, wobei das Hidden Image in einem Brennpunkt, das Auge des Betrachters im anderen Brennpunkt liegt. Da der Schirm üblicherweise nahe am Hidden Image und relativ weit vom Betrachter entfernt ist, kann das Ellipsoid näherungsweise durch eine Fläche mit parabolischem oder kreisförmigen Querschnitt ersetzt werden, wobei der Auftreffpunkt des Laserstrahls auf das Hidden Image im Brennpunkt dieser Anordnung liegt und die optische Achse hin zum Betrachter gerichtet ist.

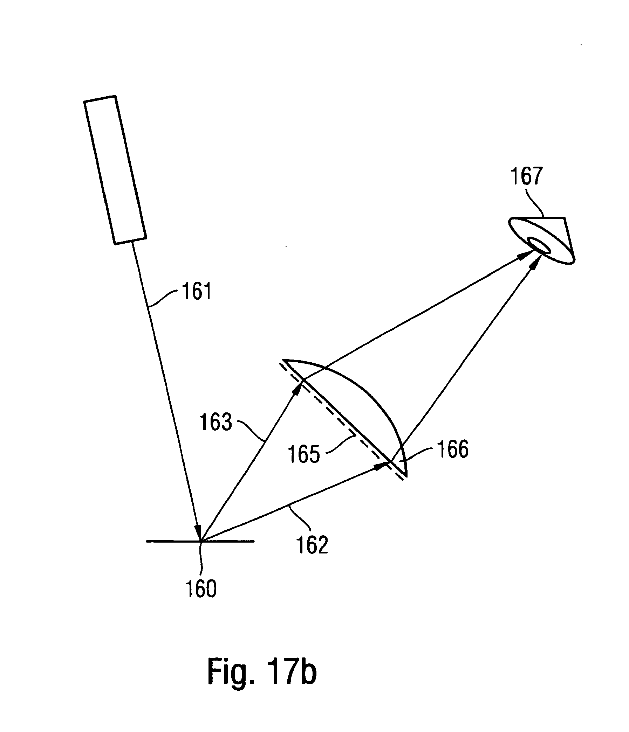

Bei Betrachtung des Auffangschirms von hinten, wie in Fig. 17(b) schematisch dargestellt, wird eine hohe Helligkeit erzielt, wenn der Auffangschirm als Mattscheibe die Rückseite 165 einer Feldlinse 166 bildet. Dabei ist die Feldlinse vorzugsweise so dimensioniert, dass die Position des Auftreffpunktes des Laserstrahls 161 auf dem Hidden Image 160 durch die Feldlinse 166 im Auge des Betrachters 167 abgebildet wird. In diesem Fall werden die Gitterstrukturelemente des Hidden Image so berechnet, dass die von ihnen ausgehenden Strahlen 162,163 die Feldlinse so durchstoßen, dass auf der mattierten Fläche auf der vom Auge abgewandten Seite der Feldlinse das gewünschte Bild erscheint.

Da die Richtung $\vec{k}'$, in die ein einfallender Lichtstrahl $\vec{k}$ gebeugt wird, nur von den Gitterparametern eines Gitterstrukturelements 26 abhängt, nicht aber von dessen Position innerhalb der Beugungsstruktur 24, kann die Anordnung der Gitterstrukturelemente 26 grundsätzlich beliebig gewählt werden. Insbesondere muss die Anordnung der Gitterstrukturelemente 26 nicht der Anordnung der Bildpunkte 22 der versteckten Information entsprechen. Im Gegenteil wird die Position der die versteckte Information erzeugenden Gitterstrukturelemente 26 vielmehr innerhalb der Beugungsstruktur 24 in der Regel so gewählt, dass ihr Vorhandensein und die dargestellte Information nicht ohne weiteres erkennbar ist. Sie werden daher, wie nachfolgend noch genauer beschrieben, insbesondere in eigens eingebrachten Lücken oder in unbelegten Bereichen einer offen sichtbaren Bildinformation der Beugungsstruktur angeordnet.

In Fig. 3 und den weiteren Figuren sind die Abmessung und Abstände der Gitterlinien 30 zur Illustration stark übertrieben dargestellt. Tatsächlich liegt die Gitterkonstante a der Gittermuster typischerweise im Bereich von etwa 0,5 μm bis etwa 2 μm, so dass eine entsprechend große Anzahl an Gitterlinien erforderlich ist, um Beugungsstrukturen mit Abmessung von einigen Millimetern oder einigen Zentimetern zu erzeugen.

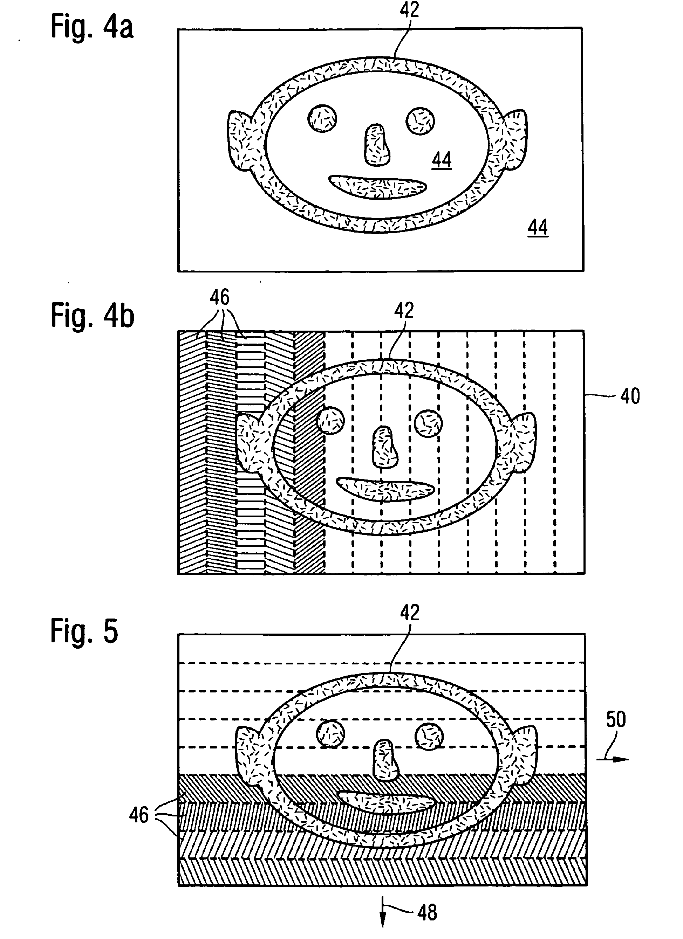

Fig. 4 zeigt ein weiteres Ausführungsbeispiel einer erfindungsgemäßen optisch variablen Beugungsstruktur 40. Fig. 4(a) zeigt zunächst ein aus ersten Gitterstrukturelementen 42 gebildetes primäres Hologramm, das die offene Bildinformation der Beugungsstruktur 40 darstellt. Das Hologramm wird, wie üblich, bei ambienter Beleuchtung der Beugungsstruktur 40 durch die ersten Gitterstrukturelemente 42 erzeugt, und ist je nach Art des Hologramms für den Betrachter aus einer oder mehreren Betrachtungsrichtungen erkennbar. Anstelle eines Hologramms kann das Bezugszeichen 42 auch ein holographisches Gitterbild oder eine andere hologrammähnliche Beugungsstruktur, ein Druckbild, eine Negativinformation in einer opaken oder reflektierenden Schicht, eine Laserbeschriftung oder dergleichen darstellen, und auch nachträglich auf die Hidden Image-Struktur aufgebracht sein.

Die nicht mit Bildteilen des primären Hologramms belegten Bereiche 44 der Beugungsstruktur 40 sind nun mit zweiten Gitterstrukturelementen 46 belegt, die die versteckte Bildinformation erzeugen. Die Gitterstrukturelemente 46 sind in dem Ausführungsbeispiel der Fig. 4(b) durch eine Vielzahl nebeneinander liegender schmaler Streifen mit einer Breite von etwa 10 μm gebildet. Ihre Breite liegt damit weit unterhalb der Auflösungsgrenze des bloßen Auges, so dass die Streifenaufteilung bei ambienter Beleuchtung des Beugungsgitters nicht erkannt werden kann.

Die Gitterstrukturelemente 46 sind jeweils mit einem Gittermuster gefüllt, dessen Gitterparameter über die darzustellende versteckte Information bestimmt sind. Der übersichtlicheren Darstellung halber ist in Fig. 4(b) nur ein Teil der Streifen 46 mit dem Gittermuster gefüllt dargestellt. Die genaue Art der versteckten Information ist für die gegenwärtige Schilderung nicht wesentlich. Es kann sich beispielsweise um einfach Umriss- oder Strichzeichnungen, wie etwa Buchstaben- oder Zahlenfolgen handeln, die aus einer Mehrzahl von Bildpunkten zusammengesetzt sind.

Zur Berechnung der Gitterparameter jedes Gitterstrukturelements 46 wird, wie in Zusammenhang mit der Fig. 3 beschrieben, für jeden der Bildpunkte der versteckten Information auf Grundlage der Schirmgeometrie und der Beleuchtungsbedingungen eine Gitterkonstante a und ein Azimutwinkel ω berechnet, so dass gerichtete, im Wesentlichen einfarbige Strahlung von dem Gittermuster in eine für den zugeordneten Bildpunkt charakteristische Richtung gebeugt wird. Die Reihenfolge der Belegung der Streifen 46 mit den Gittermustern ist grundsätzlich beliebig, vorzugsweise erfolgt sie jedoch unter Berücksichtigung der relativen Lage der Bildpunkte.

Beispielsweise können die zu nebeneinander liegenden Bildpunkten gehörenden Gittermuster in nebeneinander liegenden Streifen 46 untergebracht werden. Dies hat den Vorteil, dass, auch wenn die Beleuchtung nicht alle Streifen erfasst, die zu einem versteckten Bildmotiv gehören, zumindest zusammenhängende Teilbereiche des Bildmotivs auf dem Schirm erzeugt werden.

Alternativ können die zu übernächsten Bildpunkten gehörenden Gittermuster in nebeneinander liegenden Streifen 46 untergebracht werden. In diesem Fall wird bei partieller Beleuchtung beispielsweise der Hälfte der Streifen ein vergröberter Umriss des versteckten Bildmotivs mit jedem zweiten Bildpunkt erzeugt, so dass dessen Charakter erkennbar wird. Dadurch lässt sich leicht eine Übersicht über das versteckte Bildmotiv gewinnen. Zu diesem Zweck kann es bei Bildmotiven, die aus einer größeren Zahl von Bildpunkten aufgebaut sind, auch sinnvoll sein, die zu drittnächsten, viertnächsten oder noch weiter entfernten Bildpunkten gehörenden Gittermuster in nebeneinander liegenden Streifen 46 unterzubringen.

Im Ausführungsbeispiel werden die zweiten Gitterstrukturelemente 46 in dem freien Bereich 44 sukzessiv und zyklisch wiederholt nach einem der genannten Schemata mit den Gittermustern gefüllt. Die Wiederholung wird solange fortgesetzt, bis der gesamte vorgesehene Bereich mit Gitterstrukturelementen 46 gefüllt ist, so dass die versteckte Bildinformation praktisch an jeder Stelle der Beugungsstruktur 40 durch Bestrahlung sichtbar gemacht werden kann. Einem Bildpunkt der versteckten Bildinformation ist dann eine Vielzahl an Gitterstrukturelementen 46 der Beugungsstruktur zugeordnet. Bei einem typischen Durchmesser des Laserspots eines Laserpointers von etwa 500 $\mu$m und der gewählten Streifenbreite von 10 $\mu$m ist zudem sichergestellt, dass versteckte Bildmotive aus bis zu 50 Bildpunkten als Ganzes dargestellt werden.

Eine alternative Anordnung der Gitterstrukturelemente 46 ist in Fig. 5 gezeigt, bei der die Aufteilung in schmale Streifen nicht senkrecht, sondern waagrecht erfolgt. Auch hier ist nur ein Teil der Streifen 46 als gefüllt dargestellt. Im Ausführungsbeispiel der Figuren 4 und 5 kann die offene Bildinformation des primären Hologramms für eine bestimmte Betrachtungsrichtung 48 ausgelegt sein. Legt man für die versteckte Bildinformation die gleiche Betrachtungsrichtung fest, wie etwa in Fig. 4, so erscheinen die damit belegten Flächen 46 bei ambienter Beleuchtung weißlich oder pastellfarben, was als Gestaltungsmerkmal in dem Design der offenen Bildinformation verwendet werden kann.

Ist dieser Effekt nicht gewünscht, so kann die Betrachtungsrichtung 50 der versteckten Bildinformation senkrecht zur Betrachtungsrichtung 48 des primären Hologramms gewählt werden, wie in Fig. 5 gezeigt. In diesem Fall erscheinen die Hidden Image-Bereiche im primären Hologramm bei ambienter Beleuchtung ähnlich wie unbelegte Flächen.

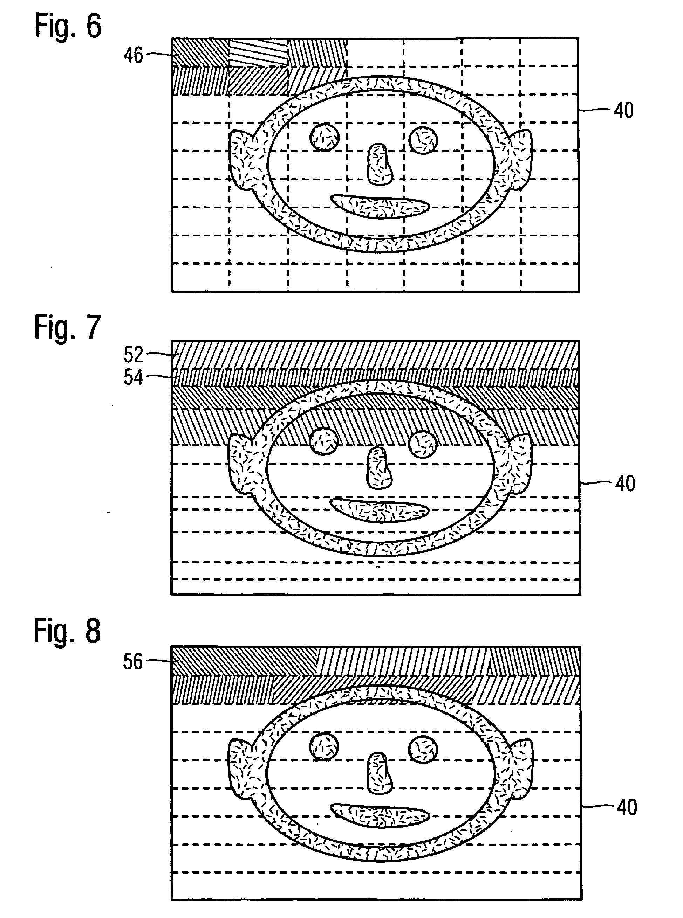

Ein weiteres bevorzugtes Ausführungsbeispiel der Erfindung ist in Fig. 6 dargestellt. Bei dieser Variante sind die Gitterstrukturelemente 46 durch rechteckige Teilbereiche gebildet, die jeweils mit einem einheitlichen Gittermuster eines zugeordneten Bildpunktes gefüllt sind. In der Figur sind nur einige der Teilbereiche 46 gefüllt dargestellt. Bei dieser Ausgestaltung lassen sich eine noch größere Zahl an Gitterstrukturelementen 46 gleichzeitig mit dem Strahl eines Laserpointers erfassen. Beträgt beispielsweise die Höhe der rechteckigen Teilbereiche beispielsweise 10 $\mu$m und ihre Länge 50 $\mu$m, so werden bei einem angenommenen Strahldurchmesser von rund 0,5 mm etwa 400 Gitterstrukturelemente gleichzeitig beleuchtet.

Selbst wenn das versteckte Bildmotiv nicht aus so vielen Bildpunkten besteht, wird durch die Aufteilung in kleine Teilbereiche eine Verkleinerung der Strukturen im Hidden Image-Bereich erreicht. Beispielsweise kann auch bei der Darstellung von vergleichsweise wenigen Bildpunkten mit nebeneinander liegenden Streifen eine Periodenlänge erreicht werden, die mit bloßem Auge erkennbar ist und so den Bildeindruck der offenen Information stört. Durch Unterteilung der Streifen in kleinere rechteckige Abschnitte können die den Bildpunkten zugeordneten Gitterstrukturelemente 46 dagegen in einem Flächenbereich unterhalb der Auflösungsgrenze des Auges angeordnet werden.

Anstelle der regelmäßigen Aufteilung der Fig. 6 kommt auch eine Abschnittseinteilung in Frage, bei der die rechteckigen Teilbereiche in übereinander liegenden Streifen gegeneinander verschoben sind. Auch kann die Aufteilung in benachbarten Streifen völlig unregelmäßig sein. Statt der rechteckigen Abschnitte können auch beliebig geformte Teilbereiche, wie etwa Dreiecke, Sechsecke oder dergleichen, eingesetzt werden. Eine regelmäßige Form der Teilbereiche erleichtert es dabei, eine vollständige Bedeckung des Hidden Image-Bereichs zu erzielen.

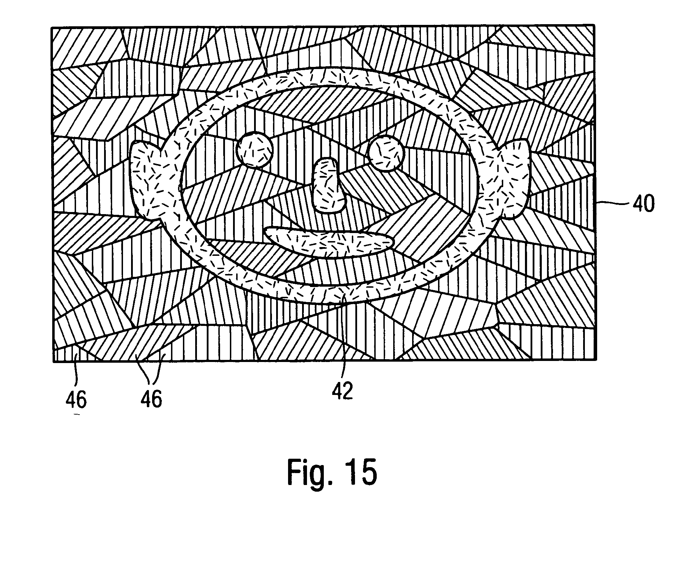

Eine unregelmäßige Form der Teilbereiche wiederum hat den Vorteil, dass sich störende, mit bloßem Auge sichtbare Muster in den Hidden Image-Bereichen einfacher vermeiden lassen. Eine solche alternative Anordnung der zweiten Gitterstrukturelemente 46 ist in Fig. 15 gezeigt. Bei dieser Variante weisen die Teilbereiche der zweiten Gitterstrukturelemente 46 unregelmäßig geformte Umrisse auf. Wie bei der in Fig. 6 gezeigten regelmäßigen Aufteilung sind die Teilbereiche jeweils mit einem einheitlichen Gittermuster eines zugeordneten Bildpunktes gefüllt.

Eine Weiterbildung der Erfindung ist in dem Ausführungsbeispiel der Figur 7 illustriert. Bei dieser Gestaltung sind die Bildpunkte der versteckten Bildinformation mit unterschiedlichen Helligkeiten belegt, wodurch attraktive Gestaltungsmöglichkeiten, wie beispielsweise Graustufenbilder, möglich sind. Dazu wird der Flächenanteil jedes Gitterstrukturelements 46 je nach der gewünschten Helligkeit des zugeordneten Bildpunkts kleiner oder größer ausgeführt. Soll beispielsweise ein erster Bildpunkt $P_1$ der versteckten Information mit der doppelten Intensität leuchten wie ein zweiter Punkt $P_2$, so werden die mit dem Punkt $P_1$ zugeordneten Streifen 52 mit doppelter Breite wie die dem Punkt $P_2$ zugeordneten Streifen 54 ausgebildet. Analog wird für andere Helligkeitswerte vorgegangen.

Anstelle einer Änderung der Größe der Streifen kann auch jeweils eine unterschiedliche Anzahl gleich großer Bereiche vorgesehen sein. Beispielsweise lassen sich die Hidden Image-Bereiche in Flächenanteile aufteilen, die jeweils etwa 0,0001 mm$^2$ groß sind. Soll beispielsweise ein erster Bildpunkt $P_1$ mit der doppelten Intensität leuchten wie ein zweiter Bildpunkt $P_2$, so werden mit den zu $P_1$ gehörigen Gitterdaten doppelt so viele Teilbereiche zu je 0,0001 mm$^2$ belegt wie mit den zu $P_2$ gehörigen Gitterdaten.

Zerlegt man Streifen in Abschnitte, so kann, wie in Fig. 8 gezeigt, die Streifenbreite konstant gelassen werden und nur die Länge der Abschnitte 56 je nach gewünschter Helligkeit variiert werden. Selbstverständlich können die beiden Maßnahmen auch zusammen eingesetzt werden, also sowohl Streifenbreite als auch Abschnittslänge verändert werden.

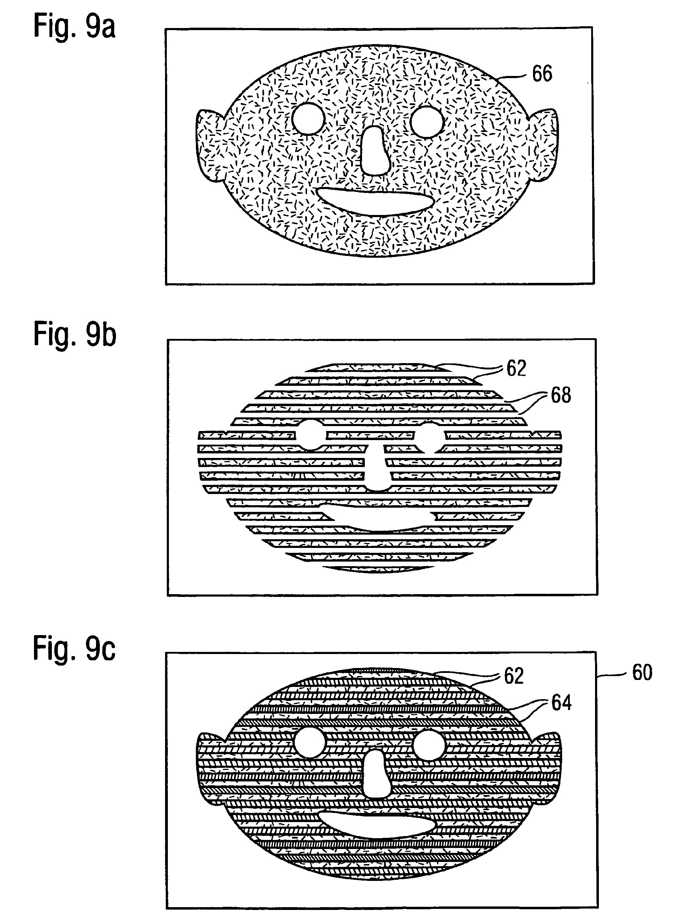

Eine weitere Möglichkeit, die offene und die versteckte Information miteinander zu kombinieren, wird nunmehr in Zusammenhang mit der Beugungsstruktur 60 der Fig. 9 erläutert. Bei diesem Beispiel sind die ersten Gitterstrukturelemente 62, die die offene Bildinformation erzeugen, und die zweiten Gitterstrukturelemente 64, die die versteckte Bildinformation erzeugen, flächig miteinander verschachtelt. Dazu wird das in Fig. 9(a) gezeigte primäre Hologramm 66 zunächst in schmale Streifen aufgeteilt, Fig. 9(b). Da unmittelbar benachbarte Streifen nur wenig unterschiedliche Bild-information enthalten, kann beispielsweise jeder zweite Streifen weggelassen werden, und in die freigewordenen Lücken 68 des Hologramms 66 können Streifen 64 des Hidden Images eingefügt werden, wie in Fig. 9(c) dargestellt. Jeder Streifen 64 ist dabei, wie oben beschrieben, einem Bildpunkt der versteckten Bildinformation zugeordnet und mit einem entsprechend der Lage des Bildpunktes berechneten Gittermuster belegt. Das Einfügen der Streifen 64 in die Lücken 68 wiederholt sich zyklisch, bis alle Lücken 68 des Hologramms aufgefüllt sind.

Bei dieser Variante kann die versteckte Bildinformation unabhängig vom Bildgehalt der offenen Information in die Beugungsstruktur eingefügt werden, da sie nicht in unbelegten Flächenbereichen abgelegt werden muss. Dafür führt das Weglassen von ersten Gitterstrukturelementen aus dem primären Hologramm zu einer entsprechend dem weggelassenen Anteil geringeren Helligkeit.

Bei der Herstellung der verschachtelten Beugungsstruktur können die ersten Gitterstrukturelemente 62 des primären Hologramms und die zweiten Gitterstrukturelemente 64 des Hidden Image im gleichen Verfahren, vorzugsweise mittels Elektronenstrahllithographie geschrieben werden. Dabei werden insbesondere die in Druckschriften DE 102 26115 und DE 102 43 413 beschriebenen Verfahren eingesetzt und alle Bildteile in einem Zug geschrieben.

Alternativ werden die ersten Gitterstrukturelemente 62 und die zweiten Gitterstrukturelemente 64 in unterschiedlichen Verfahren belichtet. Dazu kann man beispielsweise wie in der Druckschrift DE 103 08 328 in den dortigen Fig. 1-3, 8, 9 und 11 dargestellt vorgehen, und die zweiten Gitterstrukturelemente 64 in die Lücken des primären Hologramms 66 einfügen.

Anstelle der Streifenzerlegung der Fig. 9 können auch beliebig geformte kleine Lücken in dem primären Hologramm 66 erzeugt werden, um die Gitterstrukturelemente flächig zu verschachteln. In diese Lücken werden dann die zweiten Gitterstrukturelemente mit den jeweiligen Gittermustern eingebracht.

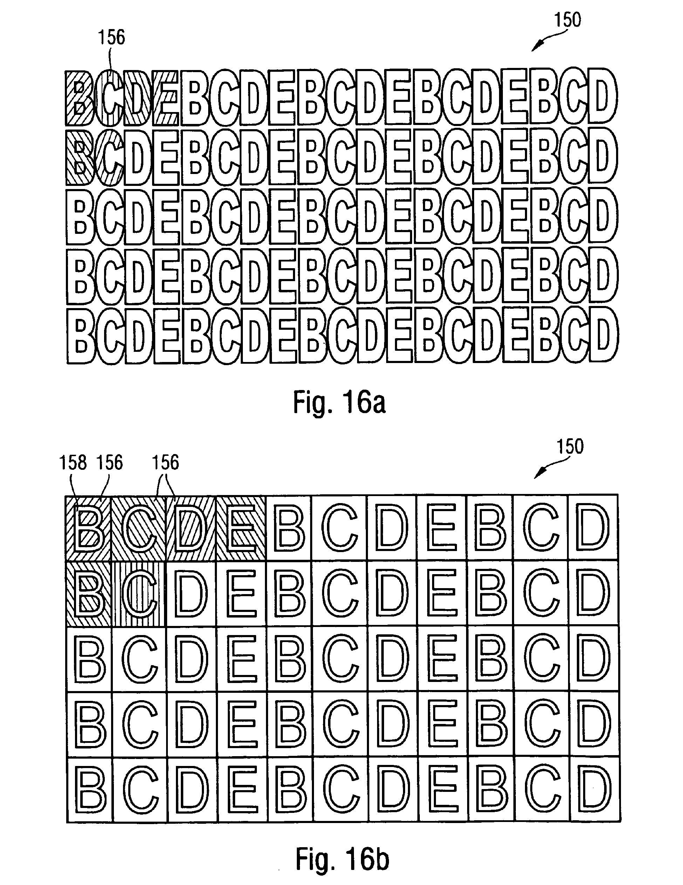

Eine weitere Möglichkeit besteht darin, das Hidden Image und das primäre Hologramm so zu überlagern, dass das primäre Hologramm unter dem Hidden Image sichtbar bleibt. Dazu kann so vorgegangen werden, wie in der Druckschrift DE 103 08 328 in den dortigen Fig. 17a-c und 18a-d dargestellt. Das Hidden Image und das primäre Hologramm können auch in einem Ausführungsbeispiel so überlagert werden, dass entweder das primäre Hologramm oder das Hidden Image bereichsweise zugeschüttet wird, wobei die Bereiche so gewählt werden, dass ihr Fehlen im primären Hologramm nicht störend auffällt. Dazu kann beispielsweise wie in der Druckschrift DE 103 08 328 in den dortigen Fig. 16a-d beschrieben vorgegangen werden.

Im Zusammenhang mit der Fig. 5 wurde beschrieben, dass die Betrachtungsrichtung der versteckten Bildin-formation senkrecht oder parallel zur Betrachtungsrichtung des primären Hologramms gelegt werden kann. Werden der Hidden Image-Bereich und das primäre Hologramm überlagert oder verschachtelt, so empfiehlt es sich, die Hidden Image-Betrachtungsrichtung senkrecht zur Betrachtungsrichtung des primären Hologramms anzuordnen, da bei paralleler Anordnung ein störender weißlicher Schleier über dem primären Hologramm erzeugt wird.

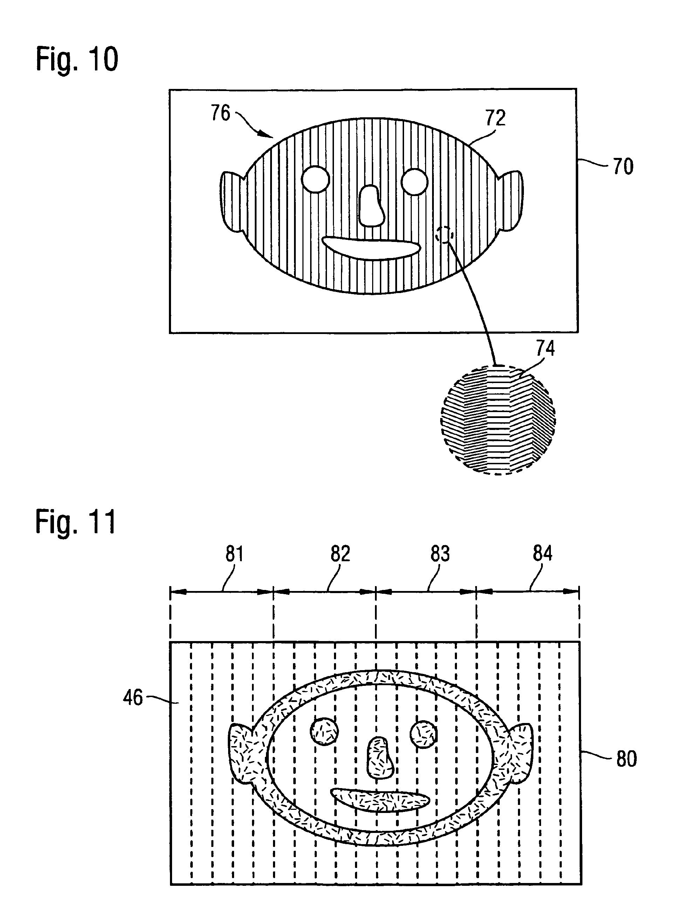

Fig. 10 zeigt eine Beugungsstruktur 70. Die Beugungsstruktur 70 enthält kein primäres Hologramm als offene Bildinformation. Vielmehr ist der Hidden Image-Bereich 72, also der Bereich, der die versteckte Bildinformation erzeu-genden Gitterstrukturelemente 74 enthält, so gestaltet, dass er selbst mit seiner Form und Lage die offene Bildinformation, im betrachteten Beispiel ein Gesicht 76, bildet. Bei ambienter Beleuchtung der Beugungsstruktur 70 ist nur das Gesicht 76 zu erkennen, bei Bestrahlung mit einem Laserpointer erscheint die versteckte Bildinformation auf einem Auffangschirm.

Bei der Wahl der Bildmotive für die versteckte Information sind Umrisszeichnungen oder Strichzeichnungen gegenüber den ebenfalls möglichen flächigen Bildmotiven in der Regel bevorzugt, da sie weniger Bildpunkte zu ihrer Darstellung benötigen. Je weniger Bildpunkte verwendet werden, desto größer ist grundsätzlich die Helligkeit pro Bildpunkt. Weniger Bildpunkte erzeugen auch ein weniger detailliertes Bild, das unempfindlicher gegen Trübung durch Abnutzung oder Knittern ist. Dies stellt bei der Motivwahl für Hidden Images einen wichtigen Gesichtspunkt dar, da sie auf solche Einflüsse sehr empfindlich reagieren. Weniger Bildpunkte im Hidden Image Bereich erzeugen im primären Hologramm zudem eine kleinere Wiederholungsperiode und stören damit weniger. Auch kann man bei wenigen Bildpunkten die Streifenbreiten und/oder Streifenabschnitte größer machen und erhält damit weniger Übergangszonen, die unter Umständen die Effektivität reduzieren.

Neben statischen Bildinformationen, die an mehreren oder vielen Stellen der Beugungsstruktur in gleicher Form abgelegt werden, kann die versteckte Bildinformation auch mehrere Teilbildinformationen enthalten, die bei Beleuchtung unterschiedlicher zugeordneter Teilbereiche der Beugungsstruktur erzeugt werden. Beispielsweise zeigt Fig. 11 eine Beugungsstruktur 80, die ähnlich wie die Beugungsstruktur 40 der Fig. 4(b) ausgebildet ist. Allerdings ist der von den ersten Gitterstrukturelementen 42 unbelegte Bereich 44 im Ausführungsbeispiel der Fig. 11 in vier Abschnitte 81-84 unterteilt, die jeweils eine unterschiedliche versteckte Teilbildinformation enthalten. Jeder Abschnitt 81-84 ist, wie oben beschrieben, in eine Vielzahl schmaler Streifen unterteilt, die die zweiten Gitterstrukturelemente 46 bilden.

Beispielsweise enthalten die Abschnitte 81-84 eine Bewegungsreihe eines Bildmotivs, so dass beim aufeinander folgenden Beleuchten der zugehörigen Abschnitte ein Bewegungsablauf des Motivs erzeugt wird. Um keine unschönen Überlagerungen entstehen zu lassen, bei denen man zwei oder mehrere Bewegungszustände gleichzeitig sieht, wird die Breite der Abschnitte 81-84 etwa so groß wie der typische Laserpointer-Leuchtpunkt gemacht.

Fig. 11 zeigt nebeneinander angeordnete Abschnitte 81-84. Die Abschnitte können jedoch auch senkrecht übereinander oder in beliebiger Richtung angeordnet sein, der Laserpointer muss dann beim Auslesen entsprechend bewegt werden. Eine Anordnung nebeneinander liegender Bilder kommt der natürlichen Bewegung der Hand, die den Laserpointer führt, dabei allerdings am meisten entgegen. Soll bei geradliniger Bewegung des Laserpointers in jeder Richtung eine Motivabfolge sichtbar sein, so empfiehlt es sich, die Gitterstrukturelemente 46 nicht in Form gerader Streifen, sondern in gebogener oder geschwungener Gestalt, beispielsweise in Wellenform, auszubilden.

Neben Bewegungsreihen können die verschiedenen Abschnitte auch andere Bilderfolgen enthalten, beispielsweise ein Pumpbild, einen Übergang zwischen zwei oder mehreren verschiedenen Bildmotiven, ein einblendendes, ausblendendes oder blinkendes Bildmotiv oder auch verschiedene räumliche Ansichten eines Bildmotiv aus unterschiedlichen Richtungen, so dass beim Abfahren der zugehörigen Abschnitte beispielsweise ein sich auf dem Auffangschirm drehender Würfel erscheint.

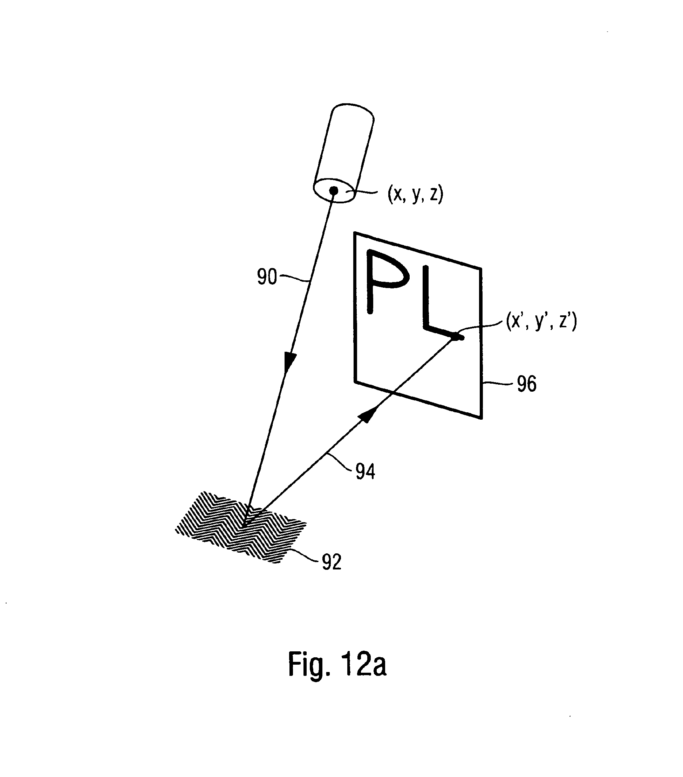

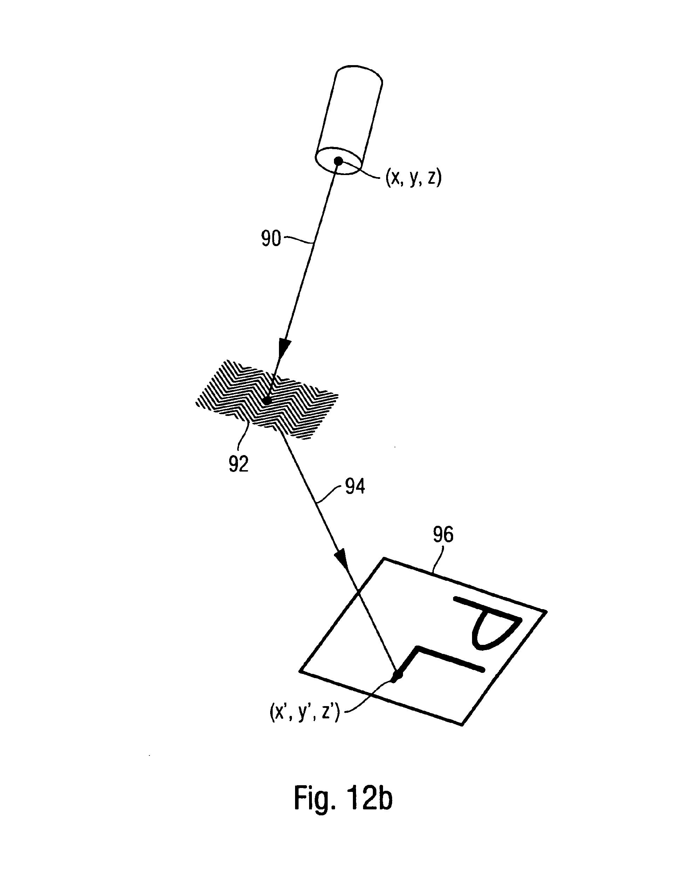

Fig. 12 zeigt eine schematische Darstellung der Beugung eines Laserstrahls an einer erfindungsgemäßen Beugungsstruktur bei Betrachtung in Aufsicht bzw. in Reflexion (Fig. 12(a)) und bei Betrachtung in Durchsicht (Fig. 12(b)). Ausgehend vom Punkt (x,y,z) trifft dabei ein Laserstrahl 90 auf ein Gitter 92, das sich im Nullpunkt des Koordinatensystems befindet. Der Laserstrahl 90 wird dort gebeugt (Bezugszeichen 94) und trifft im Punkt (x', y', z') auf einen Auffangschirm 96.

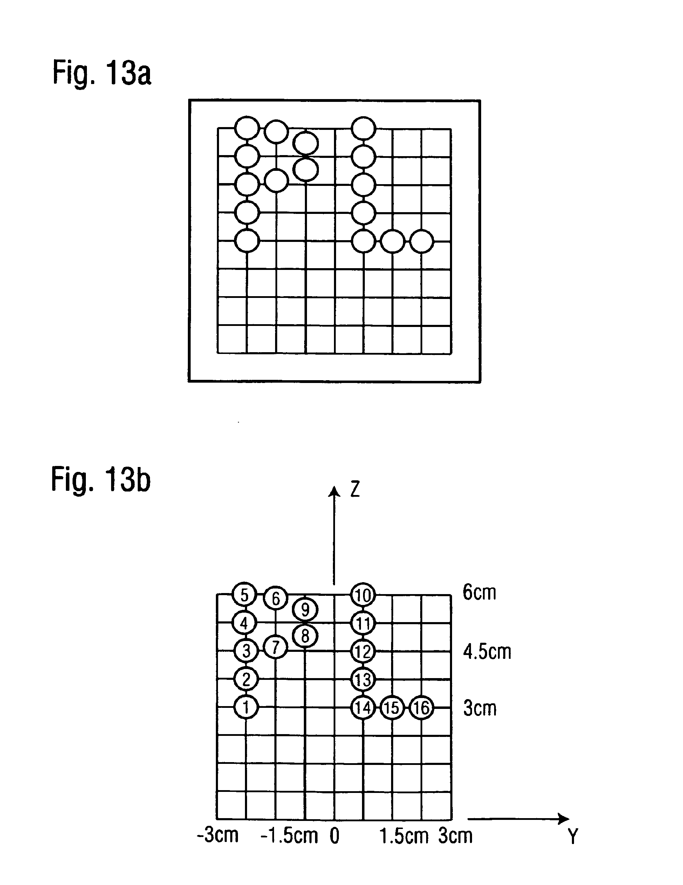

Tabelle 1 zeigt ein Rechenbeispiel für eine erfindungsgemäße Hidden Image-Beugungsstruktur, wie sie in Fig. 12(a) schematisch dargestellt ist, die nun mit Bezug auf Figuren 12(a) und 13 weiter erläutert wird. Aus den Angaben im Vorspann der Tabelle 1 und aus den Positionen der Punkte 1 bis 16, die die Buchstabenfolge PL repräsentieren, lassen sich mithilfe der Beziehungen (1) bzw. (2) die zu den Punkten 1 bis 16 gehörenden Azimutwinkel und Gitterkonstanten berechnen. Die Ergebnisse sind in Tabelle 1 zusammengestellt.

**Tabelle 1:**

Beugungsordnung m =1
Wellenlänge des Lasers: 635 nm
Position des Lasers: x = -1.2 cm, y = -1.4 cm, z =11.5 cm
Position der Mattscheibe: x' = -5 cm, senkrecht zur x-Achse
Position des Gitters: in der xy-Ebene im Nullpunkt

| Punkt-Nr | x'(cm) | y'(cm) | z'(cm) | $\omega(°)$ | a (nm) |
|---|---|---|---|---|---|
| 1 | -5 | -2,25 | 3 | 28,0026 | 620,8619 |
| 2 | -5 | -2,25 | 3,75 | 28,2041 | 653,9430 |
| 3 | -5 | -2,25 | 4,5 | 28,4308 | 691,1591 |
| 4 | -5 | -2,25 | 5,25 | 28,6760 | 731,4135 |
| 5 | -5 | -2,25 | 6 | 28,9343 | 773,7920 |
| 6 | -5 | -1,5 | 5,9 | 22,8330 | 793,3048 |
| 7 | -5 | -1,5 | 4,6 | 22,2286 | 715,3931 |
| 8 | -5 | -0,8 | 4,875 | 16,0325 | 749,4073 |
| 9 | -5 | -0,8 | 5,625 | 16,4790 | 797,3516 |
| 10 | -5 | 0,75 | 6 | 1,9045 | 857,3042 |
| 11 | -5 | 0,75 | 5,25 | 1,2564 | 804,5961 |
| 12 | -5 | 0,75 | 4,5 | 0,6396 | 754,3350 |
| 13 | -5 | 0,75 | 3,75 | 0,0676 | 707,6518 |
| 14 | -5 | 0,75 | 3 | -0,4428 | 665,9348 |
| 15 | -5 | 1,5 | 3 | -7,8639 | 673,8483 |
| 16 | -5 | 2,25 | 3 | -14,8714 | 679,6329 |

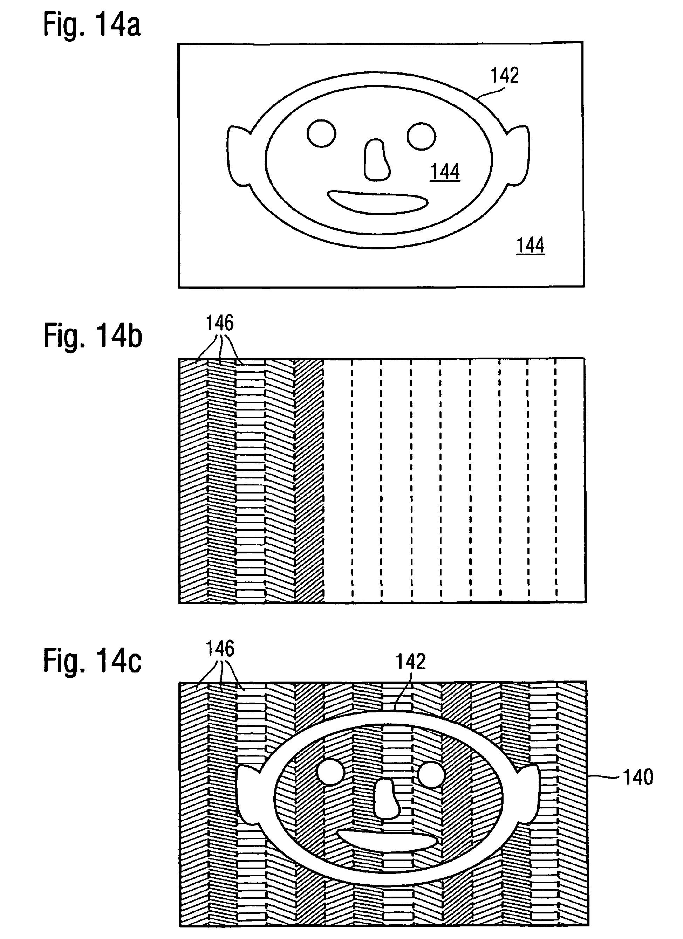

Weitere Beispiele werden nunmehr in Zusammenhang mit Fig. 14 erläutert.

In einer ersten Form ist das Hidden Image ein aus Gitterstrukturelementen 146 gebildetes Gitterbild, wie Fig.14(b) dargestellt, in das die in Fig. 14(a) gezeigte offene Bildinformation 142 in Form von Aussparungen in der Metallschicht des für die Betrachtung in Aufsicht ausgelegten Hidden Image eingebracht ist. Damit ergibt sich die in Fig. 14(c) gezeigte Beugungsstruktur 140, in der der Bereich 142 in einer glitzernden metallischen Schicht transparent ausgespart ist. Das Hidden Image in dieser metallischen Schicht kann wie oben beschrieben nachgewiesen werden. Analog zu Fig. 14(c) können auch die Ausführungsbeispiele der Figuren 5 bis 8 als Hidden Image mit Aussparungen ausgebildet sein.

Bei einer weiteren Form stellt Fig. 14(b) ein auf einem Objekt aufgebrachtes Hidden Image-Gitterbild dar und Fig. 14(a) zeigt ein Druckbild, mit welchem dieses Hidden Image-Gitterbild überdruckt ist. Insgesamt entsteht so wieder eine Beugungsstruktur 140 wie in Fig. 14(c), wobei in diesem Fall das Bezugszeichen 142 die gedruckte offene Bildinformation und das Bezugszeichen 146 die Gitterstrukturelemente der versteckten Bildinformation darstellt. Analog zu Fig. 14(c) können auch die Ausführungsbeispiele der Figuren 5 bis 8 als Hidden Image mit Überdruckungen ausgebildet sein.

In noch einer weiteren Form stellt Fig. 14(b) ein auf einem Objekt aufgebrachtes Hidden Image-Gitterbild dar und Fig. 14(a) zeigt eine Laserbeschriftung, mit welcher das Hidden Image-Gitterbild teilweise überschrieben ist. Insgesamt entsteht so eine Beugungsstruktur 140, die eine gelaserte offene Bildinformation 142 und eine versteckte Bildinformation erzeugende Gitterstrukturelemente 146 aufweist. Analog zu Fig. 14(c) können auch die Ausführungsbeispiele der Figuren 5 bis 8 als Hidden Image mit Laserbeschriftung ausgeführt sein.

Auf einer Serie von Objekten kann die offene Bildinformation gleich sein oder individuell ausgeführt werden. Beispiele für individuelle Bildinformation sind Drucken mit einem Nummerierwerk oder Laserbeschriftung mit individueller Ansteuerung.

Gemäß einer weiteren Form ist das Hidden Image ein aus zweiten Gitterstrukturelementen 156 gebildetes Gitterbild, bei welchem die Teilbereiche der Gitterstrukturelemente die Form beliebiger Zeichen und/ oder Muster aufweisen und auf diese Weise selbst eine (gegebenenfalls mit der Lupe erkennbare) offene Bildinformation darstellen, wie in Fig. 16(a) und (b) gezeigt. Insgesamt entsteht so eine Beugungsstruktur 150, die eine versteckte Bildinformation erzeugende Gitterstrukturelemente 156 und eine durch die Gestaltung dieser Gitterstrukturelemente erzeugte offene Bildinformation aufweist.

Bei der in Fig. 16(a) gezeigten Gestaltung sind die zweiten Gitterstrukturelemente 156 selbst in Form von Zeichen und/ oder Mustern, beispielsweise als Schriftzeichen, ausgeführt und jeweils mit einem einheitlichen Gittermuster eines zugeordneten Bildpunktes gefüllt. Alternativ können die Zeichen und/ oder Muster auch in Form von Aussparungen 158, beispielsweise als Negativschrift, in den zweiten Gitterstrukturelementen 156 vorliegen, wie dies in Fig. 16(b) dargestellt ist. Die Gitterstrukturelemente 156 sind dabei als rechteckige Teilbereiche ausgebildet. Der übersichtlicheren Darstellung halber ist in den Fig. 16 (a) und (b) nur ein Teil der durch die Schriftzeichen bzw. durch die rechteckigen Teilbereiche gebildeten Gitterstrukturelemente 156 mit dem Gittermuster gefüllt dargestellt.

Selbstverständlich können Hidden Images auch ohne Verbindung mit einer offenen Bildinformation sinnvoll sein. Hidden Image-Gitterbilder können daher auch z.B. in einem Sicherheitsetikett vorliegen, ohne dass sie selbst aufgrund ihrer Gestaltung eine offene Bildinformation darstellen.

**Patentansprüche**

1. Optisch variable Beugungsstruktur (40), die eine offene und eine versteckte Bildinformation enthält, wobei die offene Bildinformation bei ambienten Beleuchtungsbedingungen für einen Betrachter sichtbar ist und die Beugungsstruktur (40) erste Bildelemente (42) aufweist, die die offene Bildinformation darstellen, und die erste Gitterstrukturelemente umfassen, die die offene Bildinformation unter den ambienten Beleuchtungsbedingungen erzeugen, während die versteckte Bildinformation unter ambienten Beleuchtungsbedingungen für einen Betrachter nicht erkennbar ist und bei gerichteter, im Wesentlichen einfarbiger Beleuchtung der Beugungsstruktur mit einem Auffangschirm auffangbar ist, bei der die versteckte Bildinformation aus einer Mehrzahl einzelner Bildpunkte zusammengesetzt ist und die Beugungsstruktur zweite Gitterstrukturelemente (46) aufweist, die jeweils einem der Bildpunkte der versteckten Bildinformation zugeordnet sind und die jeweils ein Gittermuster enthalten, das durch zwei Gitterparameter charakterisiert ist, nämlich eine Gitterkonstante a und eine Winkelorientierung, so dass gerichtete, im Wesentlichen einfarbige Beleuchtung in eine für den zugeordneten Bildpunkt charakteristische Richtung gebeugt wird und die zweiten Gitterstrukturelemente (46) somit die versteckte Bildinformation erzeugen, wobei die zweiten Gitterstrukturelemente (46) in solchen Flächenbereichen der ersten Bildelemente (42) angeordnet sind, welche für die Darstellung der offenen Bildinformation von untergeordneter Bedeutung sind, nämlich wobei entweder

    - die zweiten Gitterstrukturelemente (46) in von den ersten Gitterstrukturelementen unbelegten Bereichen der ersten Bildelemente (42) angeordnet sind, in denen keine Bildanteile der offenen Bildinformation abgelegt sind, oder

- die ersten Bildelemente und die zweiten Gitterstrukturelemente so überlagert sind, dass entweder die ersten Gitterstrukturelemente der offenen Bildinformation oder die zweiten Gitterstrukturelemente der versteckten Bildinformation bereichsweise zugeschüttet sind, wobei die Bereiche so gewählt sind, dass ihr Fehlen in der offenen Bildinformation nicht störend auffällt,

und wobei der besagte Auffangschirm eine vorgegebene Geometrie aufweist und die Gitterkonstante a und die Winkelorientierung der zweiten Gitterstrukturelemente (64) auf Grundlage der Auffangschirmgeometrie unter Verwendung der Beziehung $\vec{n}\times(\vec{k'}-\vec{k})=m\vec{g}$ berechnet sind, wobei $\vec{n}$, $\vec{k'}$, und $\vec{k}$ den Normalenvektor auf dem Gitter, den Projektionsvektor und den Beleuchtungsvektor, m die Beugungsordnung und $\vec{g}$ einen Vektor der Länge $2\pi/a$ darstellt, der in Richtung parallel zu den Gitterlinien zeigt.

2. Beugungsstruktur nach Anspruch 1, **dadurch gekennzeichnet, dass** die zweiten Gitterstrukturelemente (46) in Form von Streifen, insbesondere von senkrechten oder waagrechten Streifen in den Flächenbereichen der ersten Gitterstrukturelemente, welche für die Darstellung der offenen Bildinformation von untergeordneter Bedeutung sind, angeordnet sind, oder in Form gleichartig oder ungleichartig gestalteter Teilbereiche, insbesondere in Form rechteckiger Teilbereiche, in den Flächenbereichen der ersten Gitterstrukturelemente, welche für die Darstellung der offenen Bildinformation von untergeordneter Bedeutung sind, angeordnet sind.

3. Beugungsstruktur nach Anspruch 2, **dadurch gekennzeichnet, dass** die Breite der Streifen oder eine charakteristische Abmessung der Teilbereiche unterhalb der Auflösungsgrenze des bloßen Auges liegt.

4. Beugungsstruktur nach Anspruch 2 oder 3, **dadurch gekennzeichnet, dass** nebeneinander liegende Streifen oder nebeneinander liegende Teilbereiche nebeneinander liegenden Bildpunkten der versteckten Bildinformation zugeordnet sind, oder dass nebeneinander liegende Streifen oder nebeneinander liegende Teilbereiche solchen Bildpunkten der versteckten Bildinformation zugeordnet sind, die übernächste, drittnächste oder viertnächste Nachbarn sind.

5. Beugungsstruktur nach wenigstens einem der Ansprüche 1 bis 4, **dadurch gekennzeichnet, dass** die offene Bildinformation auf eine erste vorgegebene Betrachtungsrichtung ausgelegt ist und die versteckte Bildinformation auf eine zweite vorgegebene Betrachtungsrichtung senkrecht oder parallel zur ersten Betrachtungsrichtung ausgelegt ist.

6. Beugungsstruktur nach wenigstens einem der Ansprüche 1 bis 5, **dadurch gekennzeichnet, dass** die offene und/oder die versteckte Bildinformation jeweils im Wesentlichen über die Gesamtfläche der Struktur verteilt ist.

7. Beugungsstruktur nach wenigstens einem der Ansprüche 1 bis 6, **dadurch gekennzeichnet, dass** die zweiten Gitterstrukturelemente (46), die die versteckte Bildinformation erzeugen, in unterschiedlichen Flächenanteilen vorgesehen sind, insbesondere durch Streifen unterschiedlicher Breite oder durch Teilbereiche verschiedener Größe gebildet sind.

8. Beugungsstruktur nach wenigstens einem der Ansprüche 1 bis 7, **dadurch gekennzeichnet, dass** die offene Bildinformation ein Hologramm, ein holographisches Gitterbild oder eine andere hologrammähnliche Beugungsstruktur darstellt und/oder dass die versteckte Bildinformation eine Umrisszeichnung, eine Strichzeichnung oder einen Schriftzug darstellt.

9. Beugungsstruktur nach wenigstens einem der Ansprüche 1 bis 8, **dadurch gekennzeichnet, dass** die versteckte Bildinformation mehrere Teilbildinformationen enthält, die bei Beleuchtung unterschiedlicher zugeordneter Teilbereiche der Beugungsstruktur erzeugt werden.

10. Beugungsstruktur nach Anspruch 9, **dadurch gekennzeichnet, dass** die Teilbildinformationen

a) eine Bewegungsreihe eines Bildmotivs enthalten, so dass beim aufeinander folgenden Beleuchten der zugehörigen Teilbereiche ein Bewegungsablauf des Motivs erzeugt wird,

b) eine sich vergrößernde oder verkleinernde Umrisslinie eines Bildmotivs enthalten, so dass beim aufeinander folgenden Beleuchten der zugehörigen Teilbereiche ein Pumpbild des Motivs erzeugt wird,

c) eine Überlagerung von zumindest zwei Bildmotiven enthalten, so dass beim aufeinander folgenden Beleuchten der zugehörigen Teilbereiche eine Überblendung zwischen den Bildmotiven erzeugt wird,

d) ein Bildmotiv in unterschiedlichen Helligkeitsstufen enthalten, so dass beim aufeinander folgenden Beleuchten der zugehörigen Teilbereiche eine Einblendung, Ausblendung und/oder ein Blinken des Bildmotivs erzeugt wird, oder

e) ein Bildmotiv in verschiedenen Ansichten aus unterschiedlichen Betrachtungsrichtungen enthalten, so dass beim aufeinander folgenden Beleuchten der zugehörigen Teilbereiche eine räumlich variierende Ansicht des Bildmotivs erzeugt wird.

**11.** Verfahren zum Erzeugen einer optisch variablen Beugungsstruktur nach einem der Ansprüche 1 bis 10, **dadurch gekennzeichnet, dass** die ersten und zweiten Gitterstrukturelemente (46) mit demselben Herstellungsprozess, vorzugsweise mit Elektronenstrahllithographie, Direct Laser Writing, optischer Lithographie, im Holomax-Verfahren oder im Dot-Matrix-Verfahren erzeugt werden, und dass die Geometrie eines Auffangschirms vorgegeben wird, auf dem die versteckte Bildinformation bei gerichteter, im Wesentlichen einfarbiger Beleuchtung erscheinen soll, und auf Grundlage der Schirmgeometrie unter Verwendung der Beziehung $\vec{n}\times(\vec{k'}-\vec{k})=m\vec{g}$ eine Gitterkonstante a und eine Winkelorientierung für die zweiten Gitterstrukturelemente (46) berechnet werden, die die versteckte Bildinformation erzeugen, wobei $\vec{n}$, $\vec{k'}$, und $\vec{k}$ den Normalenvektor auf dem Gitter, den Projektionsvektor und den Beleuchtungsvektor, m die Beugungsordnung und $\vec{g}$ einen Vektor der Länge $2\pi/a$ darstellt, der in Richtung parallel zu den Gitterlinien zeigt.

**12.** Sicherheitselement mit einer optisch variablen Beugungsstruktur nach wenigstens einem der Ansprüche 1 bis 10, wobei das Sicherheitselement vorzugsweise ein Sicherheitsfaden, ein Etikett oder ein Transferelement ist.

**13.** Sicherheitspapier mit einer optisch variablen Beugungsstruktur nach wenigstens einem der Ansprüche 1 bis 10 oder mit einem Sicherheitselement nach Anspruch 12.

**14.** Datenträger mit einer optisch variablen Beugungsstruktur nach wenigstens einem der Ansprüche 1 bis 10, einem Sicherheitselement nach Anspruch 12 oder einem Sicherheitspapier nach Anspruch 13, wobei der Datenträger vorzugsweise eine Banknote, ein Wertdokument, ein Pass, eine Ausweiskarte oder eine Urkunde ist.

**15.** Verfahren zur Echtheitsprüfung eines Sicherheitselements nach Anspruch 12, eines Sicherheitspapiers nach Anspruch 13 oder eines Datenträgers nach Anspruch 14, **dadurch gekennzeichnet, dass** unter vorgegebenen Beleuchtungsbedingungen Lichtstrahlen von zweiten Gitterstrukturelementen (46) einer Beugungsstruktur gebeugt werden, wobei die zweiten Gitterstrukturelemente (46) eine versteckte Bildinformation auf einem Auffangschirm erzeugen wobei entweder

i) die Geometrie des Auffangschirms so gestaltet ist, dass die von den zweiten Gitterstrukturelementen (46) gebeugten Lichtstrahlen von dem Auffangschirm zu einem Betrachter hin reflektiert werden, wobei der Auffangschirm bevorzugt gekrümmt ist und die Geometrie des Auffangschirms besonders bevorzugt durch ein Ellipsoid oder eine Fläche mit parabolischem oder kreisförmigem Querschnitt gebildet wird, oder

ii) der Auffangschirm die Rückseite einer Feldlinse bildet, wobei die Feldlinse derart gestaltet ist, dass die von den zweiten Gitterstrukturelementen (46) gebeugten Lichtstrahlen die Feldlinse so durchstoßen, dass die versteckte Bildinformation auf dem die Rückseite der Feldlinse bildenden Auffangschirm erzeugt wird,

und die Echtheit des geprüften Sicherheitselements auf Grundlage der auf dem Auffangschirm erzeugten versteckten Bildinformation beurteilt wird.

**Claims**

**1.** An optically variable diffraction pattern (40) that contains an overt and a hidden piece of image information, the overt piece of image information being visible for a viewer under ambient lighting conditions, and the diffraction pattern (40) comprising first image elements (42) that constitute the overt piece of image information and that comprise first grating pattern elements that produce the overt piece of image information under the ambient lighting conditions, while the hidden piece of image information is not perceptible for a viewer under ambient lighting conditions and is detectable with a detection screen upon directed, substantially monochromatic illumination of the diffraction pattern, in which the hidden piece of image information is composed of a plurality of individual image points and the diffraction pattern comprises second grating pattern elements (46) that are each associated with one of the image points of the hidden piece of image information and that each include a grating pattern that is **characterized by** two grating parameters, namely a grating constant a and an angle orientation, such that directed, substantially monochromatic illumination is diffracted in a direction that is characteristic for the associated image point, and the second grating pattern elements (46) thus produce the hidden piece of image information, the second grating pattern elements (46) being arranged in those areal regions of the first image elements (42) that are of secondary importance for the depiction of the overt piece of image information, namely with either

- the second grating pattern elements (46) being arranged in regions of the first image elements (42) that are unoccupied by the first grating pattern elements and in which no image portions of the overt piece of image information are rendered, or
- the first image elements and the second grating pattern elements being superimposed in such a way that either the first grating pattern elements of the overt piece of image information or the second grating pattern elements of the hidden piece of image information are filled up in some regions, the regions being chosen such that their absence in the overt piece of image information is not distracting,

and the said detection screen comprising a specified geometry and the grating constant a and the angle orientation of the second grating pattern elements (64) being calculated on the basis of the detection screen geometry using the relationship $\vec{n}\times(\vec{k}'-\vec{k})=m\vec{g}$, $\vec{n}$, $\vec{k}'$, and $\vec{k}$ representing the normal vector on the grating, the projection vector and the illumination vector, m the diffraction order, and $\vec{g}$ a vector of the length $2\pi/a$ that points in the direction parallel to the grating lines.

2. The diffraction pattern according to claim 1, **characterized in that** the second grating pattern elements (46) are arranged in the form of strips, especially of vertical or horizontal strips in the areal regions of the first grating pattern elements, which are of secondary importance for the depiction of the overt piece of image information, or are arranged in the form of similarly or dissimilarly designed sub-regions, especially in the form of rectangular sub-regions, in the areal regions of the first grating pattern elements, which are of secondary importance for the depiction of the overt piece of image information.

3. The diffraction pattern according to claim 2, **characterized in that** the width of the strips or a characteristic dimension of the sub-regions lies below the resolution limit of the naked eye.

4. The diffraction pattern according to claim 2 or 3, **characterized in that** adjacent strips or adjacent sub-regions are associated with adjacent image points of the hidden piece of image information, or **in that** adjacent strips or adjacent sub-regions are associated with those image points of the hidden piece of image information that are next but one, third next or fourth next neighbors.

5. The diffraction pattern according to at least one of claims 1 to 4, **characterized in that** the overt piece of image information is configured for a first specified viewing direction, and the hidden piece of image information is configured for a second specified viewing direction perpendicular or parallel to the first viewing direction.

6. The diffraction pattern according to at least one of claims 1 to 5, **characterized in that** the overt and/ or the hidden piece of image information are each distributed substantially across the entire surface of the pattern.

7. The diffraction pattern according to at least one of claims 1 to 6, **characterized in that** the second grating pattern elements (46), which produce the hidden piece of image information, are provided in different areal fractions, especially are formed by strips of different widths or by sub-regions of different sizes.

8. The diffraction pattern according to at least one of claims 1 to 7, **characterized in that** the overt piece of image information constitutes a hologram, a holographic grating image or another hologram-like diffraction pattern, and/or **in that** the hidden piece of image information constitutes a contour marking, a line marking or lettering.

9. The diffraction pattern according to at least one of claims 1 to 8, **characterized in that** the hidden piece of image information includes multiple sub-pieces of image information that are produced upon illumination of different associated sub-regions of the diffraction pattern.

10. The diffraction pattern according to claim 9, **characterized in that** the sub-pieces of image information

a) include a motion series of an image motif such that a motion sequence of the motif is produced upon consecutive illumination of the associated sub-regions.
b) include a growing or shrinking contour line of an image motif such that a pump image of the motif is produced upon consecutive illumination of the associated sub-regions,

c) include a superimposition of at least two image motifs such that a dissolve between the image motifs is produced upon consecutive illumination of the associated sub-regions,

d) include an image motif in different brightness levels such that a fade-in, fade-out and/ or a blinking of the image motif is produced upon consecutive illumination of the associated sub-regions, or

e) include an image motif in different views from different viewing directions such that a spatially varying view of the image motif is produced upon consecutive illumination of the associated sub-regions.

11. A method for producing an optically variable diffraction pattern according to one of claims 1 to 10, **characterized in that** the first and second grating pattern elements (46) are produced with the same manufacturing process, preferably with electron beam lithography, direct laser writing, optical lithography, in the holomax method or in the dot-matrix method, and **in that** the geometry of a detection screen is specified on which the hidden piece of image information is to appear upon directed, substantially monochromatic illumination, and on the basis of the screen geometry, using the relationship $\vec{n}\times(\vec{k}'-\vec{k})=m\vec{g}$, a grating constant a and an angle orientation are calculated for the second grating pattern elements (46), which produce the hidden piece of image information, with $\vec{n}$, $\vec{k}'$, and $\vec{k}$ representing the normal vector on the grating, the projection vector and the illumination vector, m the diffraction order, and $\vec{g}$ a vector of the length $2\pi/a$ that points in the direction parallel to the grating lines.

12. A security element having an optically variable diffraction pattern according to at least one of claims 1 to 10, the security element preferably being a security thread, a label or a transfer element.

13. A security paper having an optically variable diffraction pattern according to at least one of claims 1 to 10 or having a security element according to claim 12.

14. A data carrier having an optically variable diffraction pattern according to at least one of claims 1 to 10, a security element according to claim 12, or a security paper according to claim 13, the data carrier preferably being a banknote, a value document, a passport, an identification card or a certificate.

15. A method for checking the authenticity of a security element according to claim 12, of a security paper according to claim 13, or of a data carrier according to claim 14, **characterized in that**, under specified lighting conditions, light beams are diffracted by second grating pattern elements (46) of a diffraction pattern, the second grating pattern elements (46) producing a hidden piece of image information on a detection screen, either

i) the geometry of the detection screen being designed in such a way that the light beams that are diffracted by the second grating pattern elements (46) are reflected by the detection screen toward a viewer, the detection screen preferably being curved and the geometry of the detection screen particularly preferably being formed by an ellipsoid or a surface having a parabolic or circular cross section, or

ii) the detection screen forming the reverse of a field lens, the field lens being designed in such a way that the light beams that are diffracted by the second grating pattern elements (46) penetrate the field lens in such a way that the hidden piece of image information is produced on the detection screen that forms the reverse of the field lens,

and the authenticity of the checked security element being assessed on the basis of the hidden piece of image information produced on the detection screen.

**Revendications**

1. Structure diffractante optiquement variable (40), laquelle contient une information d'image accessible à tous et une information d'image cachée, l'information d'image accessible à tous étant visible pour un observateur dans des conditions d'éclairage ambiantes et la structure diffractante (40) présentant des premiers éléments d'image (42), lesquels représentent l'information d'image accessible à tous et lesquels comprennent des premiers éléments de structure de réseau qui génèrent l'information d'image accessible à tous dans les conditions d'éclairage ambiantes alors que l'information d'image cachée ne peut pas être reconnue par un observateur dans des conditions d'éclairage ambiantes et peut être captée avec un écran de capture en cas d'éclairage orienté, sensiblement monochrome, de la structure diffractante, dans laquelle l'information d'image cachée se compose d'une pluralité de points d'image individuels et la structure diffractante présentant des deuxièmes éléments de structure de réseau (46), lesquels sont respectivement associés à l'un des points d'image de l'information d'image cachée et lesquels contiennent respectivement un motif de réseau qui se **caractérise par** deux paramètres de réseau, à savoir une constante de réseau a et une orientation angulaire, de sorte qu'un éclairage orienté, sensiblement monochrome, est diffracté dans une direction caractéristique pour le point d'image associé et que les deuxièmes éléments de structure de réseau (46) génèrent ainsi l'information d'image cachée, moyennant quoi les deuxièmes éléments de structure de réseau (46) sont disposés dans celles des zones de surface des premiers éléments d'image (42) qui revêtent une importance mineure pour la représentation de l'information d'image accessible à tous, à savoir que,

- les deuxièmes éléments de structure de réseau (46) sont disposés dans des zones non occupées par les premiers éléments de structure de réseau des premiers éléments d'image (42), dans lesquelles il n'y a pas de parties d'image de l'information d'image accessible à tous déposées, ou bien que
- les premiers éléments d'image et les deuxièmes éléments de structure de réseau sont superposés de manière à ce que les premiers éléments de structure de réseau de l'information d'image accessible à tous ou les deuxièmes éléments de structure de réseau de l'information d'image cachée sont occultés par endroits, les endroits étant choisis de manière à ce que leur absence ne se fait pas remarquer de manière gênante dans l'information d'image accessible à tous

et moyennant quoi ledit écran de capture présente une géométrie prescrite, et la constante de réseau a et l'orientation angulaire des deuxièmes éléments de structure de réseau (64) étant calculées sur la base de la géométrie de l'écran de capture en utilisant la relation $\vec{n}\times(\vec{k'}-\vec{k'})=m\vec{g}$, $\vec{n}$, $\vec{k'}$, et $\vec{k}$ représentant le vecteur normal sur le réseau, le vecteur de projection et le vecteur d'éclairage, m représentant l'ordre de diffraction et $\vec{g}$ un vecteur de la longueur $2\pi/a$, lequel pointe en direction parallèle aux lignes du réseau.

2. Structure diffractante selon la revendication 1, **caractérisée en ce que** les deuxièmes éléments de structure de réseau (46) sont disposés sous forme de bandes, en particulier de bandes verticales ou horizontales dans les zones de surface des premiers éléments de structure de réseau, lesquelles revêtent une importance mineure pour la représentation de l'information d'image accessible à tous, ou bien sont disposés sous la forme de zones partielles configurées de manière semblable ou dissemblable, en particulier sous la forme de zones partielles rectangulaires, dans les zones de surface des premiers éléments de structure de réseau, lesquelles revêtent une importance mineure pour la représentation de l'information d'image accessible à tous.

3. Structure diffractante selon la revendication 2, **caractérisée en ce que** la largeur des bandes ou une dimension caractéristique des zones partielles se situe au-dessous de la limite de résolution de l'oeil nu.

4. Structure diffractante selon la revendication 2 ou 3, **caractérisée en ce que** des bandes juxtaposées ou des zones partielles juxtaposées sont associées à des points d'image juxtaposés de l'information d'image cachée, ou bien **en ce que** des bandes juxtaposées ou des zones partielles juxtaposées sont associées à ceux des points d'image de l'information d'image cachée, lesquels sont deuxièmes voisins suivants, troisièmes voisins suivants ou quatrièmes voisins suivants.

5. Structure diffractante selon l'une au moins des revendications 1 à 4, **caractérisée en ce que** l'information d'image accessible à tous est étudiée pour un premier sens d'observation prescrit, et l'information d'image cachée étant étudiée pour un deuxième sens d'observation prescrit perpendiculaire ou parallèle au premier sens d'observation.

6. Structure diffractante selon l'une au moins des revendications 1 à 5, **caractérisée en ce que** l'information d'image accessible à tous et/ou cachée est respectivement répartie sensiblement sur la surface totale de la structure.

7. Structure diffractante selon l'une au moins des revendications 1 à 6, **caractérisée en ce que** les deuxièmes éléments de structure de réseau (46), lesquels génèrent l'information d'image cachée, sont prévus dans des parties de surface différentes, en particulier grâce à des bandes de différentes largeurs ou grâce à des zones partielles de différentes tailles.

8. Structure diffractante selon l'une au moins des revendications 1 à 7, **caractérisée en ce que** l'information d'image ouverte représente un hologramme, une image tramée holographique ou une autre structure diffractante semblable à un hologramme et/ou **en ce que** l'information d'image cachée représente un dessin de contour, un dessin au trait ou une inscription.

9. Structure diffractante selon l'une au moins des revendications 1 à 8, **caractérisée en ce que** l'information d'image cachée contient plusieurs informations d'image partielles, lesquelles sont générées lors de l'éclairage de différentes zones partielles associées de la structure diffractante.

**10.** Structure diffractante selon la revendication 9, **caractérisée en ce que** les informations d'image partielles

a) contiennent une série de mouvements d'un motif d'image, de sorte que lors d'éclairages successifs des zones partielles associées, on génère un déroulement de mouvement du motif,

b) contiennent une ligne de contour s'agrandissant ou s'amenuisant d'un motif d'image, de sorte que lors d'éclairages successifs des zones partielles associées, on génère une image pompée du motif,

c) contiennent une superposition d'au moins deux motifs d'image, de sorte que lors d'éclairages successifs des zones partielles associées, on génère un fondu-enchaîné entre les motifs d'image,

d) contiennent un motif d'image à différents niveaux de luminance, de sorte que lors d'éclairages successifs des zones partielles associées, on génère une ouverture en fondu, une fermeture en fondu et/ou un clignotement du motif d'image, ou

e) contiennent un motif d'image en différentes vues provenant de différents sens d'observation, de sorte que lors d'éclairages successifs des zones partielles associées on génère une vue variable dans l'espace du motif d'image.

**11.** Procédé pour générer une structure diffractante optiquement variable selon l'une des revendications 1 à 10, **caractérisé en ce que** les premiers et deuxièmes éléments de structure de réseau (46) sont générés avec le même processus de fabrication, de préférence par lithographie à faisceau d'électrons, inscription laser directe, lithographie optique, lors d'un procédé holomax ou d'un procédé matriciel, et **en ce que** la géométrie d'un écran de capture est prescrite, sur lequel l'information d'image cachée doit apparaître en cas d'éclairage orienté, sensiblement monochrome et **en ce que**, sur la base de la géométrie d'écran, en utilisant la relation $\vec{n} \times (\vec{k'} - \vec{k}) = m\vec{g}$, une constante de réseau a et une orientation angulaire pour les deuxièmes éléments de structure de réseau (46) sont calculées, lesquelles génèrent l'information d'image cachée, $\vec{n}$, $\vec{k'}$, et $\vec{k}$ représentant le vecteur normal sur le réseau, le vecteur de projection et le vecteur d'éclairage, m l'ordre de diffraction et $\vec{g}$ un vecteur de la longueur $2\pi/a$, lequel pointe en direction parallèle aux lignes du réseau.

**12.** Elément de sécurité comprenant une structure diffractante optiquement variable selon l'une au moins des revendications 1 à 10, dans lequel l'élément de sécurité est de préférence un fil de sécurité, une étiquette ou un élément de transfert.

**13.** Papier de sécurité avec une structure diffractante optiquement variable selon l'une au moins des revendications 1 à 10 ou avec un élément de sécurité selon la revendication 12.

**14.** Support de données avec une structure diffractante optiquement variable selon l'une au moins des revendications 1 à 10, un élément de sécurité selon la revendication 12 ou un papier de sécurité selon la revendication 13, dans lequel le support de données est de préférence un billet de banque, un document de valeur, un passeport, une carte d'identité ou un acte juridique.

**15.** Procédé pour le contrôle de l'authenticité d'un élément de sécurité selon la revendication 12, d'un papier de sécurité selon la revendication 13 ou d'un support de données selon la revendication 14, **caractérisé en ce que**, dans des conditions d'éclairage prescrites, des faisceaux lumineux de deuxièmes éléments de structure de réseau (46) d'une structure diffractante sont diffractés, les deuxièmes éléments de structure de réseau (46) générant une information d'image cachée sur un écran de capture, moyennant quoi

i) la géométrie de l'écran de capture est conçue de manière à ce que les faisceaux lumineux diffractés par les deuxièmes éléments de structure de réseau (46) sont réfléchis par l'écran de capture vers un observateur, l'écran de capture étant de préférence courbe et la géométrie de l'écran de capture étant, de manière particulièrement préférée, formée par un ellipsoïde ou une surface avec une section transversale parabolique ou circulaire, ou bien

ii) l'écran de capture formant l'arrière d'une lentille de champ, la lentille de champ étant conçue de manière à ce que les faisceaux lumineux diffractés par les deuxièmes éléments de structure de réseau (46) transpercent la lentille de champ de manière à ce que l'information d'image cachée est générée sur l'écran de capture formant l'arrière de la lentille de champ,

et l'authenticité de l'élément de sécurité contrôlé étant appréciée sur la base de l'information d'image cachée générée sur l'écran de capture.

## Fig. 1

## Fig. 2

## Fig. 3a

Fig. 3b

Fig. 4a

42

44

44

Fig. 4b

46

42

40

Fig. 5

42

50

46

48

Fig. 6

Fig. 7

Fig. 8

Fig. 9a

Fig. 9b

Fig. 9c

Fig. 10

Fig. 11

90

(x, y, z)

(x', y', z')

96

94

92

Fig. 12a

Fig. 12b

## Fig. 13a

## Fig. 13b

Fig. 14a

Fig. 14b

Fig. 14c

Fig. 15

Fig. 16a

Fig. 16b

Fig. 17a

Fig. 17b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4237415 A1
- DE 10100836 A1
- EP 0467601 B1
- WO 9716772 A

- DE 10226115
- DE 10243413
- DE 10308328